# EUROPÄISCHE PATENTSCHRIFT

(11) **EP 4 377 172 B1**
(45) Veröffentlichungstag und Bekanntmachung des Hinweises auf die Patenterteilung: **25.02.2026**
(21) Anmeldenummer: 22754335.2
(22) Anmeldetag: 18.07.2022
(51) Int. Cl.: B60T 8/17

(54) **MEHRGRÖSSEN-VERZÖGERUNGSREGELUNGSVORRICHTUNG FÜR EINE SCHIENENFAHRZEUGEINHEIT, MEHRGRÖSSEN-VERZÖGERUNGSREGELUNGSSYSTEM FÜR EIN SCHIENENFAHRZEUG ODER EINEN ZUGVERBAND SOWIE VERFAHREN ZUR VERZÖGERUNGSREGELUNG EINER SCHIENENFAHRZEUGEINHEIT EINES SCHIENENFAHRZEUGS**
MULTIVARIABLE DELAY CONTROL DEVICE FOR A RAIL VEHICLE UNIT, MULTIVARIABLE DELAY CONTROL SYSTEM FOR A RAIL VEHICLE UNIT OR A TRAIN UNIT, AND METHOD FOR DELAY CONTROL OF A RAIL VEHICLE UNIT OF A RAIL VEHICLE
DISPOSITIF DE COMMANDE DE RETARD MULTIVARIABLE POUR UNE UNITÉ DE VÉHICULE FERROVIAIRE, SYSTÈME DE COMMANDE DE RETARD MULTIVARIABLE POUR UNE UNITÉ DE VÉHICULE FERROVIAIRE OU UNE UNITÉ DE TRAIN ET PROCÉDÉ DE COMMANDE DE RETARD D'UNE UNITÉ DE VÉHICULE FERROVIAIRE D'UN VÉHICULE FERROVIAIRE

(30) Priorität: 29.07.2021 DE 102021208234
(43) Veröffentlichungstag der Anmeldung: 05.06.2024
(73) Patentinhaber: KNORR-BREMSE Systeme für Schienenfahrzeuge GmbH, 80809 München (DE)
(72) Erfinder: FURTWÄNGLER, Ralf, 81379 München (DE); FRIESEN, Ulf, 85579 Neubiberg (DE); DEEKEN, Dirk, 80995 München (DE)
(86) Internationale Anmeldenummer: PCT/EP2022/070098
(87) Internationale Veröffentlichungsnummer: WO 2023/006483

(56) Entgegenhaltungen:
- DE-A1- 10 233 845
- DE-A1- 102015 110 053
- DE-A1- 102017 119 994
- DE-A1- 102019 108 447

## Beschreibung

Die vorliegende Erfindung betrifft eine Mehrgrößen-Verzögerungsregelungsvorrichtung für eine Schienenfahrzeugeinheit, ein Mehrgrößen-Verzögerungsregelungssystem für ein Schienenfahrzeug oder einen Zugverband mit zumindest einer ersten Schienenfahrzeugeinheit und einer zweiten Schienenfahrzeugeinheit, die jeweils eine Mehrgrößen-Verzögerungsregelungsvorrichtung aufweisen, sowie ein Verfahren zur Verzögerungsregelung einer Schienenfahrzeugeinheit eines Schienenfahrzeugs.

Zum Bremsen von Schienenfahrzeugen werden Verzögerungsregelungen eingesetzt, die das Verzögerungsverhalten der jeweiligen Schienenfahrzeugeinheiten regeln. Demnach weist ein Schienenfahrzeug zumindest eine Schienenfahrzeugeinheit auf, auf die eine vorbestimmte Verzögerungsregelung angewendet wird. Die Schienenfahrzeugeinheit kann dabei zum Schienenfahrzeug selbst oder zu diesbezüglichen Verzögerungseinheiten, wie zum Beispiel einzelnen Drehgestellen mit einer oder mehreren Bremseinrichtungen oder einzelnen Bremseinrichtungen für ein oder mehrere Drehgestelle, korrespondieren. Das Schienenfahrzeug kann wiederum Teil eines Schienenfahrzeugverbands bzw. Zugverbands sein, der aus mehreren Schienenfahrzeugen besteht.

Zur Verzögerungsregelung einzelner Schienenfahrzeuge werden beispielsweise Regler eingesetzt, die eine angeforderte Verzögerung und damit die Bremskraft entsprechend modifizieren und somit Toleranzen ausgleichen können. Die Verzögerungsregelung ist eine Funktion, die im gesamten Zugverband gleichartig wirken soll, damit möglichst keine unzulässigen Längskräfte zwischen den einzelnen Schienenfahrzeugen auftreten bzw. wirken. Aufgrund der betrieblichen Kuppelbarkeit und auch der notwendige Signalkommunikation kann eine Verzögerungsregelung auf das jeweilige Schienenfahrzeug bzw. auf eine Teileinheit von gekuppelten Schienenfahrzeugen beschränkt sein.

Eine Verzögerungsregelung würde bei einem Zugverband mit mehreren Schienenfahrzeugen idealerweise zentral vorgesehen sein, damit alle Schienenfahrzeuge eines Zugverbands zugleich geregelt werden. Eine solche zentrale Verzögerungsregelung für mehrere Schienenfahrzeuge kann jedoch lange Kommunikationszeiten zwischen den Schienenfahrzeugen bedingen, wodurch die Regeldynamik negativ beeinflusst werden kann. Zudem können je nach Schienenfahrzeugkonfiguration unterschiedliche Kommunikationszeiten auftreten. Dies stellt besondere Anforderungen an eine robuste Verzögerungsregelung oder auch an ein Umschalten der Verzögerungsregelung. Darüber hinaus müssen vorhandene Regler, beispielsweise bei einer Kupplung zweier Schienenfahrzeuge, teilweise deaktiviert werden, was eine entsprechende Strukturumschaltung bedingt.

Eine Verzögerungsregelung für mehrere Schienenfahrzeuge eines Zugverbands und/oder für mehrere Schienenfahrzeugeinheiten eines Schienenfahrzeugs kann auch unabhängige dezentrale Verzögerungsregelungen pro Schienenfahrzeug und/oder pro Schienenfahrzeugeinheit aufweisen. Wie bereits angeführt, kann die Schienenfahrzeugeinheit zu einem Schienenfahrzeug selbst oder auch zu diesbezüglichen Verzögerungseinheiten korrespondieren. Insbesondere bei Toleranzen in den Sensorsignalen, die für die jeweiligen Verzögerungsregelungen in den einzelnen Schienenfahrzeugeinheiten herangezogen werden, können aufgrund der Unterbestimmtheit des Systems im Zugverband und/oder bei mehreren Schienenfahrzeugeinheiten innerhalb eines Schienenfahrzeugs die dezentralen Verzögerungsregelungen der Schienenfahrzeugeinheiten jedoch ggf. gegeneinander arbeiten und die Stellgrößen der Verzögerungsregelung, die der Steuerstrecke zur Ansteuerung entsprechender Bremskrafterzeuger zugeführt werden, auseinanderdriften. Die Stellgröße der jeweiligen Schienenfahrzeugeinheit beeinflusst somit also die Bremskräfte der einzelnen Bremskrafterzeuger. Die Stellgrößen können dabei aus einer vorgegebenen Soll-Verzögerung im Abgleich mit einer ermittelten Ist-Verzögerung gebildet werden. Die Unterbestimmtheit des Systems ergibt sich in diesem Kontext daraus, dass die notwendige Summe der Bremskräfte, die für eine angeforderte Verzögerung des Zugverbandes oder des Schienenfahrzeugs notwendig ist, über verschiedene Bremskraftverteilungen in den einzelnen Schienenfahrzeugen bzw. Schienenfahrzeugeinheiten erreicht werden kann. Diese Verteilung der Bremskräfte wird wiederum durch die einzelnen Verzögerungsregelungen in den Schienenfahrzeugen bzw. Schienenfahrzeugeinheiten beeinflusst. Somit können sich theoretisch unendliche viele Stellgrößenvektoren ergeben, um eine geforderte Verzögerung des Zugverbandes oder des Schienenfahrzeugs zu erzielen. Mit anderen Worten können verschiedene Ausgangsgrößen aller Verzögerungsregelungen im Ergebnis die gleiche Gesamtverzögerung erzeugen, so dass das System unbestimmt ist. Die Stellgröße des Schienenfahrzeugs beeinflusst wiederum die Bremskräfte der einzelnen Bremseinrichtungen. Das Auseinanderdriften der Stellgröße in den Schienenfahrzeugen bzw. Schienenfahrzeugeinheiten kann beispielsweise durch Toleranzbänder verhindert werden. Hierdurch verringert sich allerdings die Regelgüte. Alternativ kann eine Stellgrößenbegrenzung vorgesehen werden, was allerdings immer noch zu stark unterschiedlichem Kraftschluss zwischen Rad und Schiene führen kann, was in den meisten Fällen nicht gewünscht ist. In einer weiteren Alternative können jeder dezentralen Verzögerungsregelung die gleichen Ist-Signale zur Verfügung gestellt werden, um die vorstehend beschriebenen Negativauswirkungen zu verringern. Dies kann jedoch wiederum ähnliche nachteilige Effekte, wie sie zur zentralen Verzögerungsregelung angesprochen wurden, mit sich bringen. Zudem können bei temporären Störungen in den Signalen zur Bestimmung der Ist-Verzögerung dauerhafte Abweichungen der Stellgrößen, d.h. Abweichungen der Stellgrößen für die Dauer der Bremsung, generiert werden, da auch hier ein unterbestimmtes System vorliegt. Entsprechende Störungen im Sinne einer Abweichung von der tatsächlichen Verzögerung können je nach Messprinzip auch vom Schlupf der einzelnen Räder oder der Steigung der Schienen abhängen. Die Regelung der Verzögerung des Zugverbandes und die Verteilung der Kräfte in den einzelnen Schienenfahrzeugen bzw. Schienenfahrzeugeinheiten sind damit stark verkoppelt. Bei einer Auslegung des Zugverbandes und/oder Schienenfahrzeugs auf mögliche Kraftschlussgleichheit könnte diese Verteilung der Kräfte zwischen den einzelnen Schienenfahrzeugen bzw. Schienenfahrzeugeinheiten beispielsweise durch die Verzögerungsregelung gestört werden.

Zur Regelung eines Bremssystems für ein Schienenfahrzeug offenbart die DE 10 2015 110053 A1 einen Sollwertgeber für den Sollwert der Gesamt-Bremskraft, einen Regler zur Ermittlung mindestens eines Stellgrößenwerts auf der Basis dieses Sollwerts sowie mindestens ein Stellglied, das diesen Stellgrößenwert auf mindestens eine Bremseinrichtung überträgt, wobei Mittel zur zumindest näherungsweisen Ermittlung von Beschleunigungskomponenten des Schienenfahrzeugs sowie Mittel zur Ermittlung des Istwerts der Gesamt-Bremskraft aus diesen Beschleunigungskomponenten unter Berücksichtigung der Fahrgeschwindigkeit und Fahrzeugmasse vorgesehen sind. Der Regler ist dazu ausgebildet, den Stellgrößenwert daraufhin zu regeln, dass die Regelabweichung zwischen dem Sollwert und dem ermittelten Istwert vermindert wird.

In Anbetracht der vorstehenden Ausführungen liegt der vorliegenden Erfindung die Aufgabe zugrunde, eine Verzögerungsregelung für eine Schienenfahrzeugeinheit, ein Verzögerungssystem für ein Schienenfahrzeug oder einen Zugverband sowie ein Verfahren zur Verzögerungsregelung einer Schienenfahrzeugeinheit eines Schienenfahrzeugs bereitzustellen, die/das eine Erhöhung der Regelgüte im Vergleich zu bisherigen Verzögerungsregelungen ermöglicht.

Die Aufgabe wird durch eine Mehrgrößen-Verzögerungsregelungsvorrichtung für eine Schienenfahrzeugeinheit nach Anspruch 1, ein Mehrgrößen-Verzögerungsregelungssystem für ein Schienenfahrzeug oder einen Zugverband nach Anspruch 10 sowie ein Verfahren zur Verzögerungsregelung einer Schienenfahrzeugeinheit eines Schienenfahrzeugs nach Anspruch 14 gelöst.

Erfindungsgemäß weist eine Mehrgrößen-Verzögerungsregelungsvorrichtung für eine Schienenfahrzeugeinheit einen Verzögerungsregler, der dazu konfiguriert ist, eine Verzögerungsreglerstellgröße für die Schienenfahrzeugeinheit zu bestimmen, und einen Stellgrößenregler, der dazu konfiguriert ist, eine Stellgrößenreglerstellgröße für die Schienenfahrzeugeinheit zu bestimmen, auf. Die Mehrgrößen-Verzögerungsregelungsvorrichtung ist dabei dazu konfiguriert, eine Gesamtstellgröße für die Schienenfahrzeugeinheit aus der Verzögerungsreglerstellgröße und der Stellgrößenreglerstellgröße zu bilden, und die Gesamtstellgröße einer Steuerstrecke für zumindest eine Bremskrafterzeugungseinheit sowie einer Rückführung zum Stellgrößenregler zuzuführen.

Die Schienenfahrzeugeinheit repräsentiert eine Einheit, der zumindest eine Bremskrafterzeugungseinheit oder zumindest eine vorbestimmte Bremseinrichtung der Bremskrafterzeugungseinheit zugeordnet ist, die über die der Schienenfahrzeugeinheit zugeordneten Mehrgrößen-Verzögerungsregelungsvorrichtung ansteuerbar ist. Die Schienenfahrzeugeinheit kann demnach beispielsweise zu einem Schienenfahrzeug, wie einem Triebwagen oder Waggon korrespondieren, oder auch eine Einheit eines Schienenfahrzeugs sein, die bestimmten Achsen des Schienenfahrzeugs zugeordnet ist. Die Schienenfahrzeugeinheit weist somit zumindest eine Achse mit dazugehöriger Bremseinrichtung auf. Sind in einem Schienenfahrzeug oder Zugverband mehrere Schienenfahrzeugeinheiten mit einer jeweiligen Mehrgrößen-Verzögerungsregelungsvorrichtung vorgesehen, so stellen diese jeweils dezentrale Mehrgrößen-Verzögerungsregelungsvorrichtungen dar. Insbesondere sind diese dezentralen Mehrgrößen-Verzögerungsregelungsvorrichtungen jeweils auch lokal an bzw. in den ihnen jeweils zugehörigen Schienenfahrzeugeinheiten angeordnet. Alternativ kann die Mehrgrößen-Verzögerungsregelungsvorrichtung auch räumlich getrennt von der Schienenfahrzeugeinheit angeordnet und dieser lediglich funktional zugeordnet sein. Demnach befindet sich die Mehrgrößen-Verzögerungsregelungsvorrichtung nicht in oder an der jeweiligen Schienenfahrzeugeinheit, sondern kann Teil einer zentralen Steuerungs- bzw. Regeleinheit sein, die signaltechnisch an die Schienenfahrzeugeinheit bzw. eine der Schienenfahrzeugeinheit zugehörige Bremskrafterzeugungseinheit oder zumindest eine vorbestimmte Bremseinrichtung der Bremskrafterzeugungseinheit verbunden oder verbindbar sein. Die Bremskrafterzeugungseinrichtung kann neben der zumindest einen vorbestimmten Bremseinrichtung auch eine Bremskraftregelstrecke aufweisen.

Die Mehrgrößen-Verzögerungsregelungsvorrichtung weist den Verzögerungsregler auf, dem eine Soll-Verzögerung vorgegeben wird. Die Soll-Verzögerung kann einer Soll-Verzögerung des jeweiligen Zugverbands entsprechen oder zu dieser korrespondieren. Alternativ kann die Soll-Verzögerung auch eine Soll-Verzögerung des entsprechenden Schienenfahrzeugs oder der Schienenfahrzeugeinheit repräsentieren. Zudem wird dem Verzögerungsregler eine ermittelte Ist-Verzögerung bereitgestellt, die sich gleichermaßen auf eine Ist-Verzögerung des Zugverbands, des Schienenfahrzeugs oder der Schienenfahrzeugeinheit bezieht. Insbesondere kann die Schienenfahrzeugeinheit die Ist-Verzögerung jeweils für sich autark ermitteln. Zur Reduzierung von entsprechenden Detektions- und/oder Auswertevorrichtungen und/oder zur Plausibilitätsprüfung kann aber auch alternativ oder ergänzend eine übergeordnete Bereitstellung der Ist-Verzögerung erfolgen. Der Verzögerungsregler bestimmt auf Basis des Abgleichs zwischen Soll- und Ist-Verzögerung die Verzögerungsreglerstellgröße für die Schienenfahrzeugeinheit. Die Verzögerungsreglerstellgröße repräsentiert eine Verzögerung bzw. korrigierte Verzögerung, eine Bremskraft oder eine andere die Bremswirkung repräsentierende Größe.

Neben dem Verzögerungsregler weist die Mehrgrößen-Verzögerungsregelungvorrichtung den Stellgrößenregler auf, der die Stellgrößenreglerstellgröße bestimmt. Aus der Stellgrößenreglerstellgröße und der Verzögerungsreglerstellgröße wird eine Gesamtstellgröße gebildet. Die Gesamtstellgröße wird dabei nicht nur einer weiteren Steuerstrecke für die Bestimmung der Regelgröße der Krafterzeugungseinheit zugeführt, sondern bildet auch die Basis für die Bestimmung der Soll- und Istwerte für den Stellgrößenregler. Mit anderen Worten wird der Sollwert des Stellgrößenreglers zumindest aus der Gesamtstellgröße gebildet und der Istwert aus der Gesamtstellgröße abgeleitet. Somit wird also die Gesamtstellgröße auf den Stellgrößenregler und demnach auch auf die Mehrgrößen-Verzögerungsregelungvorrichtung zurückgeführt. Die Gesamtstellgröße wird folglich sowohl über die Verzögerungsreglerstellgröße als auch die Stellgrößenreglerstellgröße bestimmt, wobei zumindest die Gesamtstellgröße wieder Einfluss auf die Stellgrößenreglerstellgröße nimmt.

Die Gesamtstellgröße kann aus der Summe der Verzögerungsreglerstellgröße und der Stellgrößenreglerstellgröße gebildet werden. Alternativ oder ergänzend kann die Gesamtstellgröße auch aus einer Gewichtung der Verzögerungsreglerstellgröße und der Stellgrößenreglerstellgröße gebildet werden. Hierzu können beispielsweise die Verzögerungsreglerstellgröße und die Stellgrößenreglerstellgröße jeweils einen vorbestimmten oder veränderbaren Gewichtungsfaktor zur Summenbildung zugewiesen bekommen und/oder jeweils nur in einem jeweiligen Definitionsbereich berücksichtigt werden. Die Gewichtung kann beispielsweise indirekt über die Wahl der Reglerparameter der Mehrgrößen- Verzögerungsregelungsvorrichtung bestimmt werden.

In einer Ausgestaltung weist die Steuerstrecke eine Gesamtbremskraftbestimmungseinheit, die dazu konfiguriert ist, auf Basis der Gesamtstellgröße eine Gesamtbremskraft der Schienenfahrzeugeinheit zu bestimmen, eine optionale Bremskraftverteilungseinheit, die dazu konfiguriert ist, die Gesamtbremskraft in eine Bremskraftverteilung zu transferieren, und eine Bremskraftsteuerungseinheit, die dazu konfiguriert ist, die Bremskrafterzeugungseinheit gemäß der Gesamtbremskraft oder der Bremskraftverteilung anzusteuern, auf.

Die Gesamtkraftbestimmungseinheit bildet somit eine zur Gesamtstellgröße korrespondierende Gesamtbremskraft der Schienenfahrzeugeinheit. Wird über die Mehrgrößen-Verzögerungsregelungsvorrichtung nur eine Achse oder ein Rad angesteuert, kann die Gesamtbremskraft insgesamt einer Bremskraftsteuerungseinheit, die dazu konfiguriert ist, die Bremskrafterzeugungseinheit anzusteuern, zugeführt werden. Weist die Schienenfahrzeugeinheit mehrere anzusteuernde Achsen oder Räder auf, wird die Gesamtbremskraft zunächst einer Bremskraftverteilungseinheit zugeführt, die dazu konfiguriert ist, die Gesamtbremskraft in eine Bremskraftverteilung zu transferieren. Die Bremskraftsteuerungseinheit steuert dann die Bremskrafterzeugungseinheit gemäß der Bremskraftverteilung an. Die Bremskraftverteilungseinheit ist demnach in Abhängigkeit des Erfordernisses einer Bremskraftverteilung vorzusehen und diesbezüglich als optional zu verstehen.

In einer Ausgestaltung weist die Rückführung eine Netto-Stellgrößen-Bestimmungseinheit auf, die dazu konfiguriert ist, auf Basis der Gesamtstellgröße oder der Gesamtstellgröße unter Berücksichtigung einer Referenzstellgröße der Schienenfahrzeugeinheit eine Netto-Stellgröße zu bestimmen.

Die Gesamtstellgröße wird demnach zur Rückführung auf den Stellgrößenregler als Ist- und/oder Sollwert über die Netto-Stellgrößen-Bestimmungseinheit geführt, also der Netto-Stellgrößen-Bestimmungseinheit zugeleitet, die aus der Gesamtstellgröße eine Netto-Stellgröße bestimmt. Die Bestimmung der Nettostellgröße kann dabei unter Berücksichtigung der Referenzstellgröße der Schienenfahrzeugeinheit erfolgen. Die Referenzstellgröße stellt eine Bezugsgröße für die Bewertung der Höhe der Stellgröße dar. Beispielsweise würde auch ohne die Verzögerungsregelung eine bestimmte Stellgröße eingestellt werden, um eine gewünschte Bremswirkung der Bremskrafterzeugungseinheit zu erzielen. Die Referenzstellgröße kann die Gesamtstellgröße somit mit einer ungeregelten Stellgröße in Beziehung setzen. In Abhängigkeit der Gesamtstellgröße und/oder des jeweiligen Anwendungsfalls kann die Referenzstellgröße auch entfallen bzw. null sein oder der Soll-Verzögerung oder einer Vorsteuerung des Verzögerungsreglers entsprechen.

Gemäß einer Weiterbildung weist die Rückführung eine Filtereinheit auf, die dazu konfiguriert ist, die Netto-Stellgröße in eine gefilterte Netto-Stellgröße zu transferieren. Insbesondere sind Filterparameter der Filtereinheit, bevorzugt zumindest eine zeitliche Verschiebung, anpassbar.

Die Netto-Stellgröße kann beispielsweise gefiltert werden, um mit weiteren ggf. zu berücksichtigenden Stellgrößen und/oder Einflussgrößen zeitlich korreliert zu werden. Hierzu kann die Filtereinheit als ein einfaches Totzeitglied ausgebildet sein oder zumindest ein Totzeitglied enthalten. Alternativ oder ergänzend kann die Filtereinheit die Netto-Stellgröße anderweitig anpassen bzw. verändern, um beispielsweise die gefilterte Netto-Stellgröße auf einen bestimmten Wertebereich zu beschränken. Beispielsweise kann die Filtereinheit auch als Tiefpassfilter ausgebildet sein. Die Parametrierung der Filtereinheit kann ein fester Wert, ein fester Wert mit Toleranz oder durch eine selbstlernende Logik der Filtereinheit festlegbar sein. Die Filterparameter selbst und/oder die Auswahl der Parametrierung hinsichtlich der vorstehenden Varianten kann anpassbar sein. Beispielsweise können unterschiedliche Bremsarten, wie eine Betriebsbremsung oder Notbremsung, ggf. auch unter Berücksichtigung weiterer Randbedingungen, wie Witterungsbedingungen, Streckenprofil und anderen Einflussfaktoren auf das resultierende oder vorzusehende Bremsverhalten, durch eine entsprechend angepasste Parametrierung vorteilhaft unterstützt werden.

In einer Weiterbildung ist die Rückführung dazu konfiguriert, dem Stellgrößenregler die Netto-Stellgröße oder die gefilterte Netto-Stellgröße als Istwert zuzuführen.

Sofern die Rückführung keine Filtereinheit aufweist oder diese deaktiviert ist bzw. keine Signalanpassung vornimmt, wird dem Stellgrößenregler die Netto-Stellgröße als Istwert zugeführt. Andernfalls wird dem Stellgrößenregler die gefilterte Netto-Stellgröße als Istwert zugeführt. Somit wird die Gesamtstellgröße als hieraus abgeleitete Netto-Stellgröße oder gefilterte Netto-Stellgröße dem Stellgrößenregler wieder als Istwert zugeführt und somit unter Berücksichtigung des entsprechenden Sollwerts für den Stellgrößenregler auf die Bestimmung der Gesamtstellgröße rückgeführt.

In einer Ausgestaltung weist die Rückführung eine Normalstellgrößenbestimmungseinheit auf, die dazu konfiguriert ist, die Gesamtstellgröße, die Netto-Stellgröße oder die gefilterte Netto-Stellgröße, insbesondere unter Berücksichtigbarkeit zumindest einer weiteren Einflussgröße, in eine Normalstellgröße zu transferieren, wobei die Rückführung dazu konfiguriert ist, dem Stellgrößenregler die Normalstellgröße als Sollwert zuzuführen.

Die zumindest eine Einflussgröße kann beispielsweise zumindest eine von außen zugeführte Störgröße und/oder zumindest eine Stellgröße einer anderen Schienenfahrzeugeinheit, um die Gesamtstellgröße, die Netto-Stellgröße oder die gefilterte Netto-Stellgröße in der Normalstellgrößenbestimmungseinheit auf die zumindest eine Stellgröße der anderen Schienenfahrzeugeinheit anzupassen, sein und/oder durch eine Mittelwertbildung der Gesamtstellgrößen, der Netto-Stellgrößen und/oder gefilterten Netto-Stellgrößen über einen vorbestimmten Zeitraum bestimmt werden. Die jeweils aktuelle Gesamtstellgröße, Netto-Stellgröße oder gefilterten Netto-Stellgröße kann somit bei der vorstehenden Mittelwertbildung mit dem entsprechenden Mittelwert in Beziehung gesetzt werden. Vergleichbar mit der Berücksichtigung einer Stellgröße der anderen Schienenfahrzeugeinheit wird dabei aus der aktuellen Gesamtstellgröße, Netto-Stellgröße oder gefilterten Netto-Stellgröße in Bezug auf den entsprechenden Mittelwert die Normalstellgröße gebildet. Zum Beispiel kann die Gesamtstellgröße, Netto-Stellgröße oder gefilterte Netto-Stellgröße dabei auf den entsprechenden Mittelwert angepasst werden oder in Abhängigkeit des Mittelwerts vorbestimmte Werte annehmen. Für die Bestimmung der Normalstellgröße können der Gesamtstellgröße, Netto-Stellgröße oder gefilterten Netto-Stellgröße und der zumindest einen Einflussgröße verschiedene Gewichtungsfaktoren zugeordnet werden. Die zumindest eine Einflussgröße kann auch zu null gesetzt werden, so dass die Normalstellgröße zur jeweiligen Gesamtstellgröße, Netto-Stellgröße oder gefilterten Netto-Stellgröße korrespondiert. Die Mehrgrößen-Verzögerungsregelungsvorrichtung kann aber auch derart konfiguriert sein, dass der Normalstellgrößenbestimmungseinheit keine zumindest eine Einflussgröße als weitere Eingangsgröße zugeführt wird. In einem solchen Fall bestimmt die Normalstellgrößenbestimmungseinheit die Normalstellgröße aus der Gesamtstellgröße, der Netto-Stellgröße oder der gefilterte Netto-Stellgröße, beispielsweise als gewichtete Gesamtstellgröße, gewichtete Netto-Stellgröße oder gewichtete gefilterte Netto-Stellgröße und/oder Mittelwertbildung über einen vorgegebenen Zeitabschnitt. Die Auswahl der zumindest einen Einflussgröße und/oder von Gewichtungsfaktoren kann in Abhängigkeit vorbestimmter Grenzwerte und/oder aktueller Betriebsbedingungen, beispielsweise der Bremsart, wie einer Betriebs- oder Notbremsung, äußerer Bedingungen, wie der Witterung oder Streckenabschnitten, oder auch einem Beladungszustand, erfolgen.

In Verbindung mit der zuvor beschriebenen Istwert-Bestimmung für den Stellgrößenregler wird die jeweils entsprechend transferierte Gesamtstellgröße also sowohl für den Istwert als auch für den Sollwert zum Stellgrößenregler zurückgeführt. Die Differenz aus Sollwert und Istwert, also beispielsweise die Differenz auf der Normalstellgröße und der gefilterten Netto-Stellgröße, kann auch über eine separate Regelabweichungsbestimmungseinheit dem Stellgrößenregler zugeführt werden. Die Regelabweichung wird demnach außerhalb des Stellgrößenreglers gebildet.

Sofern die Normalstellgrößenbestimmungseinheit, beispielsweise in einem Fall, in dem die zumindest eine Einflussgröße zu null gesetzt wird, die Netto-Stellgröße oder gefilterte Netto-Stellgröße als Normalstellgröße bestimmt, kann der dem Stellgrößenregler zugeführte Sollwert gleich dem Istwert sein. In einem solchen Fall liegt am Stellgrößenregler keine Regelabweichung vor. Die Normalstellgrößenbestimmungseinheit kann aber auch die Normalstellgröße zu null setzen, so dass der dem Stellgrößenregler zugeführte Sollwert ebenfalls null sein kann. Der Sollwert kann rechnerisch aus den Einflussgrößen in Verbindung mit der Gesamtstellgröße, der Netto-Stellgröße oder der gefilterten Netto-Stellgröße gebildet werden. Wird zumindest eine Einflussgröße als Faktor zu null gesetzt, ergibt sich für den auf den Faktor bezogenen Anteil somit auch ein zu null setzen. Ein zu null setzen kann auch dann erfolgen, wenn eine Einflussgröße zwar kein Faktor ist, aber ein zu null Setzen als eine Bedingung für ein zu null setzen der Normalstellgröße hinterlegt ist.

Die Normalstellgrößenbestimmungseinheit transferiert somit die Gesamtstellgröße, die Netto-Stellgröße oder die gefilterte Netto-Stellgröße unter Berücksichtigbarkeit zumindest einer weiteren Einflussgröße, die aber auch zu null gesetzt werden kann, in die Normalstellgröße. Mit anderen Worten kann die Normalstellgrößenbestimmungseinheit beispielsweise die Eingangsgrößen in die Normalstellgröße gemäß einer Gewichtung der Eingangsgrößen transferieren. Zum Beispiel kann die Normalstellgröße die Summe der gewichteten Eingangswerte sein. In einem solchen Fall kann dann bei einem zu null Setzen der zumindest einen weiteren Einflussgröße die Normalstellgröße die gewichtete Gesamtstellgröße, die gewichtete Netto-Stellgröße oder die gewichtete gefilterte Netto-Stellgröße sein. Demnach wird zumindest immer die gewichtete Gesamtstellgröße, die gewichtete Netto-Stellgröße oder die gewichtete gefilterte Netto-Stellgröße. In einer Variante kann die Normalstellgrößenbestimmungseinheit auch derart konfiguriert sein, dass in einem Fall, in dem die zumindest eine weitere Einflussgröße zu null gesetzt wird, die Gewichtung der Gesamtstellgröße, der Netto-Stellgröße oder der gefilterten Netto-Stellgröße von einem vorher bestimmten Wert auf 100% gesetzt wird bzw. somit ohne Gewichtung als Normalstellgröße übernommen wird. In anderen Fällen kann die vorher bestimmte Gewichtung der Gesamtstellgröße, der Netto-Stellgröße oder der gefilterten Netto-Stellgröße unabhängig der zumindest einen weiteren Einflussgröße beibehalten werden. Eine Anpassung von Gewichtungen kann auch in Abhängigkeit des Fahrbetriebs oder anderweitig erfolgen, wie dies später noch im Zusammenhang mit einem erfindungsgemäßen Mehrgrößen-Verzögerungsregelungssystem beschrieben wird. Die dort angeführten Anpassungsmöglichkeiten der Gewichtungen sind auf die Mehrgrößen-Verzögerungsregelungsvorrichtung übertragbar, sofern diese nicht systemspezifisch sind. Umgekehrt sind auch entsprechende Aspekte der Mehrgrößen-Verzögerungsregelungsvorrichtung auf das Mehrgrößen-Verzögerungsregelungssystem übertragbar.

Gemäß einer Weiterbildung ist die Rückführung dazu konfiguriert, die Normalstellgröße von der Normalstellgrößenbestimmungseinheit wieder der zuvor beschriebenen Filtereinheit zuzuführen.

Die Filtereinheit kann in einem solchen Fall beispielsweise derart konfiguriert sein, dass sie die Filterung iterativ in Grenzen derart bestimmt, dass die Abweichung von der Normalstellgröße minimal wird. Die Filtereinheit kann hierzu zum Beispiel in einem ersten Schritt ein mögliches Band für die gefilterte Netto-Stellgröße berechnen. Dies kann durch Berechnung mit verschiedenen Parametrierungen des Filters innerhalb einer vorbestimmten Toleranz erfolgen. Für jede Parametrierung wird die Abweichung der gefilterten Netto-Stellgröße von der Normalstellgröße bestimmt. Hierauf basierend wird diejenige Parametrierung der Filtereinheit gewählt, bei der die Abweichung minimal ist. Mit dieser Parametrierung werden die gefilterte Netto-Stellgröße und die Normalstellgröße zur Weiterverarbeitung berechnet. Die hier beschriebene Rückführung der Normalstellgröße und entsprechende Konfiguration der Filtereinheit ist gleichermaßen auf das im Folgenden noch erläuterte Mehrgrößen-Verzögerungsregelungssystem anwendbar.

In einer Ausgestaltung werden der Verzögerungsregler und der Stellgrößenregler durch einen einzigen Regler, insbesondere einen PI-Regler, ausgebildet.

Bei Verwendung eines PI-Reglers, der sowohl den Verzögerungsregler als auch den Stellgrößenregler umfasst, ist die Regelabweichung hierbei die Summe der Regelabweichungen der jeweiligen einzelnen Regler. Optional kann der einzige Regler, hier also exemplarisch der PI-Regler, eine Vorsteuerung beinhalten.

Gemäß einer Ausgestaltung weist der Stellgrößenregler eine statische und/oder dynamische Totzone auf.

Durch die statische Totzone kann der Stellgrößenregler derart konfiguriert werden, dass der Stellgrößenregler erst dann in die Regelung eingreift, wenn die Regelabweichung außerhalb der Totzone liegt. Die Totzone kann alternativ oder ergänzend dynamisch anpassbar sein, so dass der Stellgrößenregler in Abhängigkeit vorbestimmter Randbedingungen ein unterschiedliches Ansprechverhalten aufweisen kann.

In einem weiteren Aspekt betrifft die Erfindung ein Mehrgrößen-Verzögerungsregelungssystem für ein Schienenfahrzeug oder einen Zugverband mit zumindest einer ersten Schienenfahrzeugeinheit und einer zweiten Schienenfahrzeugeinheit, die jeweils eine Mehrgrößen-Verzögerungsregelungsvorrichtung, die die zuvor beschriebene Normalstellgrößenbestimmungseinheit aufweist, die dazu konfiguriert ist, die Netto-Stellgröße oder die gefilterte Netto-Stellgröße unter Berücksichtigung zumindest einer Einflussgröße in eine Normalstellgröße zu transferieren, aufweisen. Das Mehrgrößen-Verzögerungsregelungssystem ist dabei dazu konfiguriert, der jeweiligen Normalstellgrößenbestimmungseinheit der Mehrgrößen-Verzögerungsregelungsvorrichtung der ersten Schienenfahrzeugeinheit und/oder der zweiten Schienenfahrzeugeinheit zumindest die Netto-Stellgröße oder gefilterte Netto-Stellgröße der jeweils anderen Schienenfahrzeugeinheit als zumindest eine Einflussgröße und/oder der jeweiligen Filtereinheit der Mehrgrößen-Verzögerungsregelungsvorrichtung der ersten Schienenfahrzeugeinheit und/oder der zweiten Schienenfahrzeugeinheit zumindest die Netto-Stellgröße oder gefilterte Netto-Stellgröße der jeweils anderen Schienenfahrzeugeinheit zur Anpassung der Filterparameter zuzuführen.

Das Mehrgrößen-Verzögerungsregelungssystem ist demnach auf ein Schienenfahrzeug oder einen Zugverband gerichtet, das bzw. der aus mehreren Schienenfahrzeugeinheiten gebildet wird. Gemäß der zuvor beschriebenen Mehrgrößen-Verzögerungsregelungsvorrichtung, die zumindest die erste und die zweite Schienenfahrzeugeinheit aufweisen, kann zunächst jede dieser Schienenfahrzeugeinheiten grundsätzlich unabhängig geregelt werden. Bei einem Zusammenschluss mehrerer solcher Schienenfahrzeugeinheiten kann eine gänzlich unabhängige Verzögerungsregelung jeder Schienenfahrzeugeinheit jedoch unter bestimmten Umständen aufgrund der zuvor schon angeführten Unterbestimmtheit des Systems dazu führen, dass die Verzögerungsregelungen gegeneinander arbeiten und die Stellgrößen auseinanderdriften. Durch das vorstehende Mehrgrößen-Verzögerungsregelungssystem kann die Unterbestimmtheit des Systems verringert werden, da die Netto-Stellgröße oder gefilterte Netto-Stellgröße der Mehrgrößen-Verzögerungsregelungsvorrichtung der zumindest einen Schienenfahrzeugeinheit der Mehrgrößen-Verzögerungsregelungsvorrichtung der zumindest einen anderen Schienenfahrzeugeinheit zugeführt wird. Insbesondere erfolgt eine solche Zuführung gegenseitig, bevorzugt für alle Schienenfahrzeugeinheiten des Schienenfahrzeugs oder des Zugverbands.

In Bezug auf die erste und zweite Schienenfahrzeugeinheit mit der jeweiligen Mehrgrößen-Verzögerungsregelungsvorrichtung kann konkret die Bildung der Normalstellgröße der einen Schienenfahrzeugeinheit somit in Abhängigkeit der Netto-Stellgröße oder gefilterte Netto-Stellgröße der zumindest einen anderen Schienenfahrzeugeinheit gebildet werden. Hierzu kann beispielsweise die Netto-Stellgröße oder gefilterte Netto-Stellgröße der zweiten Schienenfahrzeugeinheit der Normalstellgrößenbestimmungseinheit der Mehrgrößen-Verzögerungsregelungsvorrichtung der ersten Schienenfahrzeugeinheit als die zumindest eine Einflussgröße zugeführt werden. Alternativ oder ergänzend kann beispielsweise auch die Netto-Stellgröße oder gefilterte Netto-Stellgröße der zweiten Schienenfahrzeugeinheit der Filtereinheit der Mehrgrößen-Verzögerungsregelungsvorrichtung der ersten Schienenfahrzeugeinheit zur Anpassung der Filterparameter zugeführt werden.

Die Normalstellgröße geht als Sollwert in den Stellgrößenregler ein. Der Istwert entspricht der eigenen Netto-Stellgröße, insbesondere der eigenen gefilterten Netto-Stellgröße. Somit wird also zumindest die eigene Stellgröße auf die Regelung zurückgeführt.

In einer Ausgestaltung kann der Stellgrößenregler der einen Schienenfahrzeugeinheit zudem eine dynamische Totzone beinhalten, die durch die Netto-Stellgröße oder gefilterte Netto-Stellgröße der anderen Schienenfahrzeugeinheit beinflussbar ist. Die Netto-Stellgröße oder gefilterte Netto-Stellgröße der anderen Schienenfahrzeugeinheit kann hierzu ebenfalls dem Stellgrößenregler der einen Schienenfahrzeugeinheit direkt oder indirekt, beispielsweise über die Filtereinheit und/oder die Normalstellgrößenbestimmungseinheit der einen Schienenfahrzeugeinheit zugeführt werden.

Alternativ oder ergänzend kann der jeweiligen Filtereinheit der Mehrgrößen-Verzögerungsregelungsvorrichtung der ersten Schienenfahrzeugeinheit und/oder der zweiten Schienenfahrzeugeinheit zumindest die Netto-Stellgröße oder gefilterte Netto-Stellgröße der jeweils anderen Schienenfahrzeugeinheit zur Anpassung der Filterparameter zugeführt werden. Demnach kann die Parametrierung der Filtereinheit der einen Schienenfahrzeugeinheit und somit die hierüber gefilterte Netto-Stellgröße über die Netto-Stellgröße oder gefilterte Netto-Stellgröße der jeweils anderen Schienenfahrzeugeinheit angepasst werden. Insbesondere können hierüber die Filterparameter dynamisch in vorbestimmten, ggf. auch anpassbaren, Grenzen angepasst werden, um eine Abweichung von der jeweiligen Netto-Stellgrößen oder gefilterten Nettostellgrößen der Schienenfahrzeugeinheiten weiter zu minimieren.

Den jeweiligen Verzögerungsreglern der Mehrgrößen-Verzögerungsregelungsvorrichtungen der ersten und zweiten Schienenfahrzeugeinheiten kann beispielsweise die gleiche Soll-Verzögerung, zum Beispiel die Soll-Verzögerung des Schienenfahrzeugs oder des Zugverbands, vorgegeben werden. Jedem Verzögerungsregler kann zudem eine ermittelte Ist-Verzögerung bereitgestellt werden. Diese kann beispielsweise autark für jede Schienenfahrzeugeinheit ermittelt werden. In einem solchen Fall beeinflusst eine Abweichung der Ist-Verzögerungsmessungen der einzelnen Schienenfahrzeugeinheiten nicht die Regelgenauigkeit bezüglich einem sich bildenden Mittelwert. Hierbei stellt sich lediglich eine Abweichung von der Normalstellgröße ein. Die Auswirkung von dynamischen Störungen der Ist-Verzögerungsmessung auf die Stellgrößen wird somit ausgeregelt. Sofern in einem Sonderfall, bei dem nur die eigene Gesamtstellgröße, Netto-Stellgröße oder gefilterte Netto-Stellgröße der jeweiligen Schienenfahrzeugeinheit auf den eigenen Stellgrößenregler zurückgeführt wird, d.h. beispielsweise die Gesamtstellgröße, Netto-Stellgröße oder gefilterte Netto-Stellgröße als Einflussgröße zu null gesetzt wird, kann bei unterschiedlichen Ist-Verzögerungen über die Parametrierung des Stellgrößenreglers gezielt ein Kompromiss zwischen der Abweichung der Stellgrößen und Regelabweichung hergestellt werden. Insbesondere kann die Ist-Verzögerung zur Regelung in einer Schienenfahrzeugeinheit als gewichteter Mittelwert der Ist-Verzögerungen mehrerer Schienenfahrzeugeinheiten gebildet werden. Die Gewichtungen können dynamisch verändert werden.

Alternativ oder ergänzend kann eine Ist-Verzögerung auch zentral, also für das gesamte Schienenfahrzeug oder den gesamten Zugverband, bestimmt und den jeweiligen Verzögerungsreglern zur Verfügung gestellt werden. Eine ergänzende Ermittlung einer solchen Ist-Verzögerung kann zu Plausibilitätsprüfungszwecken, aus Redundanzgründen und/oder zur Berücksichtigung unterschiedlicher Ist-Verzögerungen auf Schienenfahrzeugeinheits- oder Schienenfahrzeug- bzw. Zugverbandsebene vorgesehen werden.

Der jeweilige Verzögerungsregler kann zudem eine Vorsteuerung enthalten. Die Vorsteuerung erlaubt eine schnelle Reaktion, insbesondere bei großen und dynamischen Sollwertänderungen, da in diesem Fall die Angleichung des Istwerts an den Sollwert nicht durch die Mehrgrößen-Verzögerungsregelungsvorrichtung bzw. das Mehrgrößen-Verzögerungsregelungssystem, sondern zumindest teilweise an durch die Mehrgrößen-Verzögerungsregelungsvorrichtung bzw. das Mehrgrößen-Verzögerungsregelungssystem erfolgen kann. Die Mehrgrößenverzögerungsregelungsvorrichtung bzw. das Mehrgrößen-Verzögerungsregelungssystem gleicht dann die Abweichungen der Vorsteuerung von einem vorgegebenen Modell aus. Damit kann das System schneller reagieren.

Sofern die jeweilige Schienenfahrzeugeinheit jeweils ein Schienenfahrzeug repräsentiert, ist das Mehrgrößen-Verzögerungsregelungssystem auf einen Zugverband gerichtet. Das Mehrgrößen-Verzögerungsregelungssystem kann aber auch alternativ oder ergänzend auf ein Schienenfahrzeug mit zumindest zweien solcher Schienenfahrzeugeinheiten gerichtet sein. Das Mehrgrößen-Verzögerungsregelungssystem kann somit die jeweils einzelnen Mehrgrößen-Verzögerungsregelungsvorrichtungen der mehreren Schienenfahrzeugeinheiten eines Schienenfahrzeugs und/oder Zugverbands bei vergleichsweise geringen Anforderungen an die Signalkommunikation zwischen den Schienenfahrzeugeinheiten aufeinander abstimmen. Entsprechend können beispielsweise die Bremskraftverteilung und damit einhergehend die Einhaltung der Kraftschlussvorgaben verbessert werden. Die Regelgüte kann vergleichbar zu einer Verzögerungsregelung einer einzelnen Schienenfahrzeugeinheit erreicht oder zumindest angenähert werden. Die Regel- bzw. Steuerziele der Schienenfahrzeug- bzw. Zugverbandverzögerung und Bremskraftverteilung können unabhängig realisierbar und damit auslegbar sein.

Durch das beschriebene Mehrgrößen-Verzögerungsregelungssystem wird somit nicht nur die Verzögerung in den einzelnen Schienenfahrzeugeinheiten geregelt, sondern auch die Abweichung der eigenen Netto-Stellgröße von einer Normalstellgröße ausgeregelt. Auf diese Weise werden die verbleibenden Freiheitsgrade des unterbestimmten Systems gebunden.

In einer Ausgestaltung ist die Normalstellgrößenbestimmungseinheit der Mehrgrößen-Verzögerungsregelungsvorrichtung der ersten Schienenfahrzeugeinheit und/oder der zweiten Schienenfahrzeugeinheit dazu konfiguriert, die Normalstellgröße als gewichteten Mittelwert der eigenen Netto-Stellgröße oder der eigenen gefilterten Netto-Stellgröße und der zumindest einen Netto-Stellgröße der jeweils anderen Schienenfahrzeugeinheit zu bestimmen. Die jeweiligen Gewichtungsanteile korrespondieren insbesondere zu einer Anzahl an Drehgestellen oder Wagen der entsprechenden Schienenfahrzeugeinheit, zu einem Beitrag der entsprechenden Schienenfahrzeugeinheit an der Gesamtbremskraft des Schienenfahrzeugs, zu den aktuellen oder nominellen Massen der entsprechenden Schienenfahrzeugeinheiten und/oder zu den Massen der entsprechenden Schienenfahrzeugeinheiten und einer vorbestimmten Verteilung der Massen.

Die vorstehenden Gewichtungen können demnach in Abhängigkeit des jeweiligen Einflusses der entsprechenden Schienenfahrzeugeinheit auf die Gesamtverzögerung gewählt werden. Die Gewichtung der zumindest einen Netto-Stellgröße der jeweils anderen Schienenfahrzeugeinheit kann auch null werden, so dass in einem solchen Fall lediglich die eigene Gesamtstellgröße, die eigene Netto-Stellgröße oder die eigene gefilterte Netto-Stellgröße als Sollwert auf den Stellgrößenregler zurückgeführt wird. Somit kann zum Beispiel eine Regelung durch den Stellgrößenregler auch bei einem Kommunikationsausfall zwischen den Schienenfahrzeugeinheiten zumindest teilweise aufrechterhalten werden. Demnach kann vorgesehen sein, eine Netto-Stellgröße oder gefilterte Netto-Stellgröße der jeweils anderen Schienenfahrzeugeinheit dann zu null zu setzen, wenn kein entsprechendes Signal anliegt. Alternativ oder ergänzend kann auch die Normalstellgröße zu null gesetzt werden, wenn beispielsweise alle Gewichtungen zu null gesetzt werden. Alternativ oder ergänzend kann die Normalstellgröße auch zu null gesetzt werden, wenn zumindest ein zu null Setzen zumindest einer der Gewichtungen als Bedingung eines zu null Setzens der Normalstellgröße hinterlegt wird. Wird die Normalstellgröße zu null, wird in einem solchen Fall lediglich die eigene Gesamtstellgröße, die eigene Netto-Stellgröße oder die eigene gefilterte Netto-Stellgröße auf den Stellgrößenregler zurückgeführt.

Aus den Netto-Stellgrößen bzw. den gefilterten Netto-Stellgrößen der jeweiligen Schienenfahrzeugeinheiten, insbesondere zumindest der eigenen Schienenfahrzeugeinheit, wird somit die Normalstellgröße in der Normalstellgrößenbestimmungseinheit bestimmt. Zum Beispiel kann die Normalstellgröße aus dem gewichteten Mittelwert der Netto-Stellgrößen bzw. gefilterten Netto-Stellgrößen gebildet werden. In einer Ausgestaltung werden beispielsweise die gefilterte eigene Netto-Stellgröße und die ungefilterten Netto-Stellgrößen der jeweils anderen Schienenfahrzeugeinheit oder Schienenfahrzeugeinheiten zur Bildung des Mittelwerts und somit der Normalstellgröße herangezogen.

Basiert die Normalstellgröße beispielsweise auf einem gewichteten Mittelwert der netto-Stellgrößen bzw. gefilterten Netto-Stellgrößen, so kann der Stellgrößenregler bedingen, dass sich die Netto-Stellgrößen angleichen, also die Abweichung minimiert wird. In diesem Fall ist der Verzögerungsregler vom Stellgrößenregler entkoppelt, d.h. die Veränderung der Gesamtstellgröße wird primär durch den Verzögerungsregler bestimmt.

Eine Angleichung der Netto-Stellgrößen bedeutet aber nicht notwendigerweise, dass dadurch auch die realen Bremskräfte gleich sind. Die Verteilung der Bremskräfte zwischen den Schienenfahrzeugeinheiten und auch innerhalb der Schienenfahrzeugeinheiten über die Steuerstrecke ist frei wählbar und wird unabhängig von dem Verzögerungsregler und dem Stellgrößenregler ausgelegt. Werden die Abweichungen der Stellgrößen auf null reduziert, so bedeutet dies, dass der Verzögerungsregler und der Stellgrößenregler die Bremskraftverteilung, welche nach bestimmten Kriterien ausgelegt wurde, nicht beeinflusst, was der vorstehenden Entkopplung entspricht. Mit anderen Worten beeinflussen der Verzögerungsregler und der Stellgrößenregler zwar die Gesamtstellgröße, aber auf die Steuerstrecke für die Bremskraftverteilung an sich wird kein Einfluss genommen. Die Steuerstrecke für die Bremskraftverteilung wird somit unabhängig ausgelegt.

Entspricht die Schienenfahrzeugeinheit einem Schienenfahrzeug, so ist die Bremskraftverteilung zwischen den Schienenfahrzeugeinheiten beispielsweise so, dass jedes Schienenfahrzeug für sich genommen die gleiche Verzögerung erzielen würde. Eine andere Wahl der Bremskraftverteilung ist ebenso möglich, beeinflusst aber ggf. die Wahl der Gewichtungen bei der Bildung der Normalstellgröße.

Die Bremskraftverteilung kann dem Mehrgrößen-Verzögerungsregelungssystem auch nachgelagert sein. Beispielsweise können die Gesamtstellgrößen der jeweiligen Schienenfahrzeugeinheiten in einer zentralen Auswerteeinheit aufbereitet und in eine Bremskraftverteilung bzw. hierzu korrespondierende Steuersignale transferiert werden, die dann wiederum an die jeweiligen Bremskrafterzeugungseinrichtungen übermittelt werden.

Gemäß einer Weiterbildung ist die Normalstellgrößenbestimmungseinheit dazu konfiguriert, die jeweiligen Gewichtungsanteile anzupassen, insbesondere vorbestimmte Gewichtungsanteile auf null zu setzen.

Demnach müssen nicht zwangsläufig alle Netto-Stellgrößen oder gefilterten Netto-Stellgrößen der eigenen oder anderer Schienenfahrzeugeinheiten gemäß einmal vorbestimmter Gewichtungen oder grundsätzlich für sich genommen für die Bestimmung der Normalstellgröße herangezogen werden. Mit anderen Worten kann die Gewichtung und/oder die Auswahl der Netto-Stellgrößen oder gefilterten Netto-Stellgrößen dynamisch oder gemäß spezifischer Eingabemittel an geänderte Bedingungen angepasst werden. Zum Beispiel kann eine Gewichtung einer Netto-Stellgröße oder gefilterten Netto-Stellgröße einer Schienenfahrzeugeinheit bei einer Entladung dieser Schienenfahrzeugeinheit mit einer damit einhergehenden Gewichtsreduzierung und geringerem Einfluss des Gewichts auf die Verzögerung reduziert oder zu null gesetzt werden. Bevorzugt wird zumindest die eigene Netto-Stellgröße oder gefilterten Netto-Stellgröße der jeweiligen Schienenfahrzeugeinheit zur Bestimmung der Normalstellgröße in der Normalstellgrößenbestimmungseinheit berücksichtigt. In einem solchen Fall geht zumindest die eigene, ggf. gefilterte, Netto-Stellgröße in die Bestimmung der Stellgrößenreglerstellgröße über den Stellgrößenregler ein. Somit kann, beispielsweise bei - zumindest vorübergehendgeringeren Anforderungen an die Regelgenauigkeit auf einen Austausch der Netto-Stellgrößen bzw. gefilterten Netto-Stellgrößen verzichtet werden. Die Schienenfahrzeugeinheiten können somit auch entkoppelt immer noch geregelt betrieben werden. Insbesondere ermöglicht aber auch der Ausfall einer Kommunikationsverbindung zwischen den Schienenfahrzeugeinheiten immer noch eine Verzögerungsregelung der einzelnen Schienenfahrzeugeinheiten.

In einer Ausgestaltung ist das Mehrgrößen-Verzögerungsregelungssystem dazu konfiguriert, die zumindest eine Einflussgröße zur Zuführung zur Normalstellgrößenbestimmungseinheit über die Filtereinheit oder eine weitere Filtereinheit zu führen.

Demnach können die Netto-Stellgröße bzw. gefilterte Netto-Stellgröße einer anderen Schienenfahrzeugeinheit oder die Netto-Stellgrößen bzw. gefilterte Netto-Stellgrößen anderer Schienenfahrzeugeinheiten oder daraus gebildete Mittelwerte nicht nur die Parametrierung der Filtereinheit beeinflussen, sondern alternativ oder ergänzend auch der Normalstellgrößenbestimmungseinheit als wiederum gefilterte Einflussgröße oder Einflussgrößen zugeführt werden. Über die Filtereinheit der Mehrgrößen-Verzögerungsregelungsvorrichtung der jeweiligen Schienenfahrzeugeinheit kann somit nicht nur die eigene Netto-Stellgröße, sondern auch die Netto-Stellgröße oder die gefilterte Netto-Stellgröße, diese dann erneut, der jeweils anderen Schienenfahrzeugeinheit gefiltert werden. Aus den gefilterten Netto-Stellgrößen wird somit die Normalstellgröße gebildet. Im Übrigen sind auch die zuvor zur Mehrgrößen-Verzögerungsregelungsvorrichtung beschriebenen Funktionalitäten und Ausgestaltungen der Filtereinheit auf die Netto-Stellgrößen der eigenen oder anderen Schienenfahrzeugeinheit und/oder der Parametrierung der Filtereinheit entsprechend anwendbar. Hinsichtlich der Filterung der eigenen und anderer Netto-Stellgrößen kann die Parametrierung für die jeweiligen Netto-Stellgrößen unterschiedlich oder auch unterschiedlich anpassbar sein. Zumindest die eigene Netto-Stellgröße der jeweiligen Schienenfahrzeugeinheit kann gefiltert werden, um möglichst eine zeitliche Korrelation der eigenen Netto-Stellgröße mit der anderen oder den anderen Netto-Stellgrößen herzustellen. Wie bereits zur Mehrgrößen-Verzögerungsregelungsvorrichtung an sich angeführt, kann die Filtereinheit hierfür ein einfaches Totzeitglied aufweisen.

In einem weiteren Aspekt betrifft die vorliegende Erfindung ein Verfahren zur Verzögerungsregelung einer Schienenfahrzeugeinheit eines Schienenfahrzeugs, umfassend die Schritte:
- Bestimmen einer Verzögerungsreglerstellgröße über einen Verzögerungsregler,
- Bestimmen einer Stellgrößenreglerstellgröße über einen Stellgrößenregler und
- Bilden einer Gesamtstellgröße aus der Verzögerungsreglerstellgröße und der Stellgrößenreglerstellgröße.

Die Gesamtstellgröße wird dabei einer Steuerstrecke für eine Bremskrafterzeugungseinheit zugeführt sowie über eine Rückführung zum Stellgrößenregler rückgeführt.

Über die Steuerstrecke kann die Gesamtstellgröße der Bremskrafterzeugungseinheit eine Bremskraft repräsentierende Größe oder eine Bremskraftverteilung repräsentierende Größe vorgeben.

Die Vorteile und Ausgestaltungsmöglichkeiten des Verfahrens ergeben sich analog zu den Ausführungen zur Mehrgrößen-Verzögerungsregelungsvorrichtung.

In einer Ausgestaltung des Verfahrens wird die Gesamtstellgröße über die Rückführung in eine zu einer Referenzstellgröße setzbaren Netto-Stellgröße, insbesondere in eine gefilterte Netto-Stellgröße, transferiert, die dem Stellgrößenregler als Istgröße zugeführt wird und parallel über eine Normalstellgrößenbestimmungseinheit, insbesondere zur Berücksichtigung von zumindest einer Stellgröße einer weiteren Schienenfahrzeugeinheit als Einflussgröße, weiter in eine Normalstellgröße transferiert wird, die dem Stellgrößenregler als Sollgröße zugeführt wird.

Durch die Berücksichtigung der zumindest einen Stellgröße einer weiteren Schienenfahrzeugeinheit als Einflussgröße, insbesondere einer Gesamtstellgröße, Netto-Stellgröße oder gefilterten Netto-Stellgröße der weiteren Schienenfahrzeugeinheit, als Einflussgröße, kann der Stellgrößenregler die Stellgrößenreglerstellgröße in einfacher Weise unter Berücksichtigung des Verzögerungsverhaltens der zumindest einen weiteren Schienenfahrzeugeinheit anpassen.

Weitere Vorteile und Ausgestaltungsmöglichkeiten des Verfahrens ergeben sich bezüglich der Berücksichtigung der Stellgrößen anderer Schienenfahrzeugeinheiten als Einflussgröße oder Einflussgrößen analog zu den Ausführungen zum Mehrgrößen-Verzögerungsregelungssystem. Entsprechend kann das Verfahren auch auf eine Zuführung der Netto-Stellgröße oder gefilterten Netto-Stellgröße einer jeweils anderen Schienenfahrzeugeinheit zu einer Filtereinheit gerichtet sein, wie dies vorstehend beschrieben ist.

Gerade in Bezug auf das Mehrgrößen-Verzögerungsregelungssystem bzw. hierzu analoge Verfahrensausgestaltungen ergibt sich der Vorteil, dass jeder Verzögerungsregler bzw. eine nachfolgende Steuerstrecke für die jeweilige Schienenfahrzeugeinheit unabhängig ausgelegt werden kann. Eine Anpassung bzw. die Berücksichtigung anderer Schienenfahrzeugeinheiten erfolgt dann über den Stellgrößenregler, der in den zuvor genannten Varianten auf Stellgrößen der anderen Schienenfahrzeugeinheiten zurückgreifen kann.

Die Regelung der Verzögerung und die Verteilung der Bremskräfte können im Sinne einer Entkopplung unabhängig voneinander ausgelegt werden. Dazu werden die Freiheitsgrade des jeweils unterbestimmten Systems entsprechend gebunden. Der Stellgrößenregler kann es ermöglichen, dass die gewünschte Bremskraftverteilung möglichst nicht durch die Verzögerungsregelung beeinflusst wird.

Darüber hinaus wirken sich lange Kommunikationslaufzeiten zwischen den Schienenfahrzeugeinheiten bzw. deren Varianz nicht auf die eigentliche Verzögerungsregelung aus. Der Stellgrößenregler kann entsprechend in einfacher Weise laufzeittolerant ausgelegt werden.

Im Folgenden wird die Erfindung unter Bezugnahme auf die beigefügten Figuren näher erläutert. Die Figuren zeigen im Einzelnen:
**Figur 1** eine schematische Darstellung einer Mehrgrößen-Verzögerungsregelungsvorrichtung für eine Schienenfahrzeugeinheit gemäß einer exemplarischen Ausführungsform;
**Figur 2** eine schematische Darstellung eines Mehrgrößen-Verzögerungsregelungssystems für einen Zugverband gemäß einer exemplarischen Ausführungsform;
**Figur 3** eine schematische Darstellung einer dynamischen Störung der Messgrößen;
**Figur 4** eine schematische Darstellung der Soll- und Ist-Beschleunigung sowie der Stellgrößen für ein ideales System mit unabhängigen Reglern oder einem erfindungsgemäßen Mehrgrößen-Verzögerungsregelungssystem;
**Figur 5** eine schematische Darstellung der Soll- und Ist-Beschleunigung sowie der Stellgrößen bei einem statischen Messfehler bei unabhängigen Reglern;
**Figur 6** eine schematische Darstellung der Soll- und Ist-Beschleunigung sowie der Stellgrößen bei einem dynamischen Messfehler bei unabhängigen Reglern;
**Figur 7** eine schematische Darstellung der Soll- und Ist-Beschleunigung sowie der Stellgrößen bei einem statischen Messfehler bei einem erfindungsgemäßen Mehrgrößen-Verzögerungsregelungssystem; und
**Figur 8** eine schematische Darstellung der Soll- und Ist-Beschleunigung sowie der Stellgrößen bei einem dynamischen Messfehler bei einem erfindungsgemäßen Mehrgrößen-Verzögerungsregelungssystem.

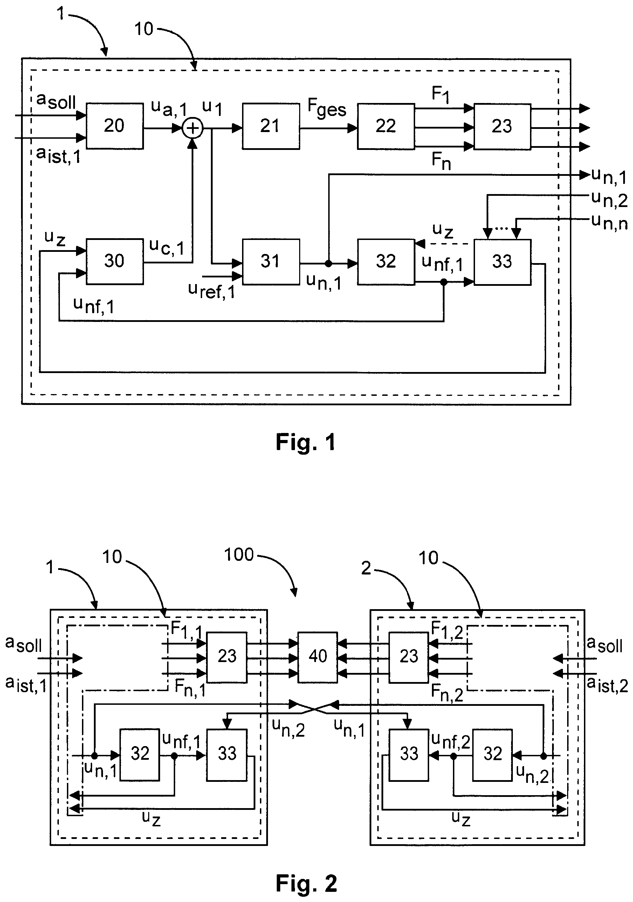

**Figur 1** zeigt eine schematische Darstellung einer Mehrgrößen-Verzögerungsregelungsvorrichtung 10 für eine Schienenfahrzeugeinheit 1 gemäß einer exemplarischen Ausführungsform. Die Schienenfahrzeugeinheit 1 korrespondiert hier zu einem Schienenfahrzeug, beispielsweise einem Triebwagen oder einem Waggon. Die Schienenfahrzeugeinheit 1 kann alternativ auch eine von mehreren Schienenfahrzeugeinheiten eines Schienenfahrzeugs sein. Die Mehrgrößen-Verzögerungsregelungsvorrichtung 10 weist einen Verzögerungsregler 20 und einen Stellgrößenregler 30 auf. Der Verzögerungsregler 20 bestimmt aus einer Soll-Verzögerung aₛₒₗₗ und einer Ist-Verzögerung a_{ist,1} eine Verzögerungsreglerstellgröße u_{a,1}. Die Ist-Verzögerung a_{ist,1} wird in der hier gezeigten Ausführungsform durch eine Ist-Verzögerungsmesseinheit (nicht gezeigt) der Schienenfahrzeugeinheit 1 ermittelt. Gemäß einer alternativen Ausführungsform kann die Ist-Verzögerung a_{ist,1} auch zentral für ein aus mehreren Schienenfahrzeugeinheiten 1 gebildetes Schienenfahrzeug oder einen Zugverband aus mehreren Schienenfahrzeugeinheiten 1 bzw. Schienenfahrzeugen ermittelt werden. Der Stellgrößenregler 30 bestimmt aus Regelabweichung zwischen einem Sollwert und einem Istwert, hier konkret einer Normalstellgröße u_{z} als Sollwert und einer gefilterten Netto-Stellgröße als Istwert, wie diese später noch beschrieben werden, eine Stellgrößenreglerstellgröße u_{c,1}. Aus der Summe der Verzögerungsreglerstellgröße u_{a,1} und der Stellgrößenreglerstellgröße u_{c,1} wird eine Gesamtstellgröße u₁ gebildet. Die Gesamtstellgröße u₁ wird einer Gesamtbremskraftbestimmungseinheit 21 zugeführt, die die Gesamtstellgröße u₁ in eine Gesamtkraft F_{ges} überführt. Die Gesamtkraft F_{ges} wird wiederum einer Bremskraftverteilungseinheit 22 zugeführt, die die Gesamtkraft F_{ges} in eine Bremskraftverteilung F₁ bis Fₙ aufteilt. Die Bremskraftverteilung F₁ bis Fₙ entspricht dabei der Schienenfahrzeugeinheit 1 zuzuordnenden Bremskrafterzeugungseinrichtungen (nicht gezeigt) einer Bremskrafterzeugungseinheit 40 (Fig. 2). Die Ansteuerung der Bremskrafterzeugungseinrichtungen bzw. der Bremskrafterzeugungseinheit 40 erfolgt über eine Bremskraftsteuerungseinheit 23, die die Bremskraftverteilung F₁ bis Fₙ in jeweilige Ansteuerungsbefehle transferiert.

Die Gesamtstellgröße u₁ wird zudem über einen weiteren Regelkreis geführt, um hierüber den Sollwert und den Istwert für den Stellgrößenregler 30 zu bilden. Hierzu wird in einer Netto-Stellgrößen-Bestimmungseinheit 31 aus der Differenz der Gesamtstellgröße u₁ und einer Referenzstellgröße u_{ref,1} zunächst eine Netto-Stellgröße u_{n,1} bestimmt. Die Referenzstellgröße u_{ref,1} bildet somit einen Bezugspunkt für die Bewertung der Höhe der Gesamtstellgröße u₁. In der exemplarischen Ausführungsform entspricht die Referenzstellgröße u_{ref,1} der Soll-Verzögerung aₛₒₗₗ. Gemäß alternativen Ausführungsformen kann die Referenzstellgröße u_{ref,1} auch einer optionalen Vorsteuerung des Verzögerungsreglers 20 entsprechen oder auf null gesetzt werden bzw. entfallen. Die jeweilige Auswahl der Referenzstellgröße u_{ref,1} kann einer Voreinstellung entsprechen und/oder gemäß Anwendungsfall, beispielsweise in Abhängigkeit der Bremsart oder äußerer Bedingungen anpassbar sein. Die Netto-Stellgröße u_{n,1} wird anschließend einer Filtereinheit 32 zugeführt. Die Filtereinheit 32 generiert aus der Netto-Stellgröße u_{n,1} eine gefilterte Netto-Stellgröße u_{nf,1}. Hierzu weist die Filterreinheit 32 in der gezeigten Ausführungsform ein Totzeitglied auf, um eine zeitliche Korrelation der Netto-Stellgröße u_{n,1} mit in der Folge noch zu berücksichtigender Einflussgrößen, hier Netto-Stellgrößen u_{n,2} bis u_{n,n} anderer Schienenfahrzeugeinheiten, herzustellen. In alternativen Ausführungsformen kann die Filtereinheit 32 auch entfallen oder bedarfsweise zuschaltbar bzw. hinsichtlich einer Transformation der Netto-Stellgröße u_{n,1} in die gefilterte Netto-Stellgröße u_{nf,1} aktvierbar sein. Zudem wird die Netto-Stellgröße u_{n,1} hier auch über einen weiteren Signalzweig aus der Mehrgrößen-Verzögerungsregelungsvorrichtung 10 ausgeleitet, um anderen Schienenfahrzeugeinheiten bzw. hierzu korrespondierenden Mehrgrößen-Verzögerungsregelungsvorrichtungen zur Verfügung gestellt werden zu können. Gemäß alternativen Ausführungsformen kann ein solcher Signalzweig aber auch entfallen.

Die gefilterte Netto-Stellgröße u_{nf,1} wird dem Stellgrößenregler 30 als Istwert für die Bestimmung der Stellgrößenreglerstellgröße u_{c,1} zur Verfügung gestellt. Gemäß alternativen Ausführungsformen, insbesondere bei Ausführungsformen ohne Filtereinheit 32 oder entsprechender Deaktivierung der Filtereinheit 32 kann auch direkt die Netto-Stellgröße u_{n,1} als Istwert an den Stellgrößenregler 30 geleitet werden. Zur wahlweisen Weiterleitung der Netto-Stellgröße u_{n,1} oder der gefilterten Netto-Stellgröße u_{nf,1} können auch zwei schaltbare Signalzweige vorgesehen werden, um dem Stellgrößenregler 30 die Netto-Stellgröße u_{n,1} direkt oder als gefilterte Netto-Stellgröße u_{nf,1} über die Filtereinheit 32 zuzuführen.

Zur Bildung der Normalstellgröße u_{z} als Sollwert für den Stellgrößenregler 30 wird die gefilterte Netto-Stellgröße u_{nf,1} darüber hinaus der Normalstellgrößenbestimmungseinheit 33 zugeführt. Gemäß der optionalen Filtereinheit 32 kann in alternativen Ausführungsformen auch direkt die Netto-Stellgröße u_{n,1} der Normalstellgrößenbestimmungseinheit 33 zugeführt werden. In solchen Fällen ist die folgende Beschreibung analog auf die Netto-Stellgröße u_{n,1} anstelle der gefilterten Netto-Stellgröße u_{nf,1} anwendbar, sofern sie keine filterspezifischen Aspekte betrifft. Die Normalstellgrößenbestimmungseinheit 33 bestimmt die Normalstellgröße u_{z} aus der gefilterten Netto-Stellgröße u_{nf,1} unter Berücksichtigung weiterer Einflussgrößen, hier den Netto-Stellgrößen u_{n,2} bis u_{n,n} anderer Schienenfahrzeugeinheiten. Gemäß alternativen Ausführungsformen können alternativ oder ergänzend zu den Netto-Stellgrößen u_{n,2} bis u_{n,n} anderer Schienenfahrzeugeinheiten auch andere Einflussgrößen berücksichtigt werden oder wahlweise entfallen. In der exemplarischen Ausführungsform wird die Normalstellgröße u_{z} aus einem gewichteten Mittelwert der gefilterten Netto-Stellgröße u_{nf,1} und den Netto-Stellgrößen u_{n,2} bis u_{n,n} gebildet. Die Gewichtung der gefilterten Netto-Stellgröße u_{nf,1} und den Netto-Stellgrößen u_{n,2} bis u_{n,n} korrespondiert hier zu der jeweiligen Gewichtung der Anzahl der Drehgestelle jeweiligen Schienenfahrzeugeinheiten. In alternativen Ausführungsformen können die Gewichtungen alternativ oder ergänzend einem typischen Betrag der Schienenfahrzeugeinheit zur Gesamtbremskraft, der jeweiligen aktuellen oder nominellen Masse der jeweiligen Schienenfahrzeugeinheit und/oder der jeweiligen aktuellen oder nominellen Masse der jeweiligen Schienenfahrzeugeinheit in Verbindung mit einer vorbestimmten Verteilung zwischen den Schienenfahrzeugeinheiten entsprechen. Die Normalstellgrößenbestimmungseinheit 33 kann dabei so konfiguriert sein, dass sie die jeweiligen Gewichtungen anpassen kann. Insbesondere können einzelne Gewichtungen auch auf null gesetzt werden. Werden beispielsweise alle Gewichtungen der Netto-Stellgrößen u_{n,2} bis u_{n,n} der anderen Schienenfahrzeugeinheiten auf null gesetzt, so wird dem Stellgrößenregler 30 lediglich die eigene gefilterte Netto-Stellgröße u_{nf,1} als Sollwert zugeführt. Die Mehrgrößen-Verzögerungsregelungsvorrichtung kann somit auch unabhängig von der Berücksichtigung der Netto-Stellgrößen u_{n,2} bis u_{n,n} betrieben werden. Hieraus kann resultieren, dass in einem Fall, in dem die Normalstellgrößenbestimmungseinheit 33 gemäß nicht zu berücksichtigender Einflussgrößen die gefilterte Netto-Stellgröße u_{nf,1} als Normalstellgröße u_{z} übernimmt, die gefilterte Netto-Stellgröße u_{nf,1} sowohl den Sollwert als auch den Istwert für den Stellgrößenregler 30 darstellt. In einem solchen Fall tritt keine Regelabweichung auf und der Stellgrößenregler nimmt keinen weiteren Einfluss auf die Gesamtstellgröße u₁. Die Berücksichtigung von Einflussgrößen durch die Normalstellgrößenbestimmungseinheit ist in der gezeigten Ausführungsform anpassbar. Demnach werden jeweilige Einflussgrößen lediglich bei einer Überschreitung eines anpassbaren vorbestimmten Grenzwerts berücksichtigt. Gemäß alternativen Ausführungsformen kann aber auch zumindest ein jeweiliger Grenzwert unveränderlich vorgegeben sein oder eine grenzwertgebundene Berücksichtigung entfallen.

Zudem ist die Mehrgrößen-Verzögerungsregelungsvorrichtung in der exemplarischen Ausführungsform derart konfiguriert, dass die Normalstellgröße u_{z} von der Normalstellgrößenbestimmungseinheit 33 optional wieder auf die Filtereinheit 32 geführt werden kann. Die optionale Rückführung ist durch den gestrichelten Pfeil gekennzeichnet und erfolgt hier in Abhängigkeit einer zeitlichen Verschiebung der Netto-Stellgrößen u_{n,2} bis u_{n,n} gegenüber der gefilterten Netto-Stellgröße u_{nf,1}. Gemäß alternativen Ausführungsformen kann eine solche Rückführung aber auch grundsätzlich vorgesehen sein oder entfallen. Über die Rückführung der Normalstellgröße u_{z} wird die Parametrierung der Filtereinheit 32 angepasst. Die Parametrierung wird dabei iterativ in Grenzen derart bestimmt, dass eine Abweichung der gefilterten Netto-Stellgröße u_{nf,1} von der Normalstellgröße u_{z} minimal wird. Die Filtereinheit 32 berechnet hierzu in einem ersten Schritt eine mögliches Band für die gefilterte Nettostellgröße u_{nf,1}. Die Berechnung erfolgt mit verschiedenen Parametrierungen der Filtereinheit 32 innerhalb einer vorbestimmten Toleranz. Für jede Parametrierung wird die Abweichung der gefilterten Netto-Stellgröße u_{nf,1} von der Normalstellgröße u_{z} berechnet. Anschließend wird die Parametrierung der Filtereinheit 32 gewählt, bei der die Abweichung minimal ist. Mit dieser Parametrierung werden schlussendlich die gefilterte Nettostellgröße u_{nf,1} und somit wiederum die Normalstellgröße u_{z} zur Weiterverarbeitung berechnet.

**Figur 2** zeigt eine schematische Darstellung eines Mehrgrößen-Verzögerungsregelungssystems 100 für einen Zugverband gemäß einer exemplarischen Ausführungsform. Der Zugverband wird hier aus einer ersten Schienenfahrzeugeinheit 1, die ein erstes Schienenfahrzeug repräsentiert, und einer zweiten Schienenfahrzeugeinheit 2, die ein zweites Schienenfahrzeug repräsentiert, gebildet. Die erste und zweite Schienenfahrzeugeinheit 1, 2 weisen jeweils eine Mehrgrößen-Verzögerungsregelungsvorrichtung 10 gemäß **Figur 1** auf. Zur Vereinfachung der Darstellung werden die jeweiligen Verzögerungsregler 20, Gesamtbremskraftbestimmungseinheiten 21, Bremskraftverteilungseinheiten 22, Stellgrößenregler 30 und Netto-Stellgrößen-Bestimmungseinheiten 31 durch den strichpunktiert gezeichneten Bereich repräsentiert.

Den Verzögerungsreglern 20 wird jeweils die gleiche Soll-Verzögerung aₛₒₗₗ vorgegeben. Zur Bildung der jeweiligen Regelabweichung der Ist-Verzögerung a_{ist,1} bzw. a_{ist,2} in Bezug auf die Sollverzögerung aₛₒₗₗ bzw. zur Bestimmung der Verzögerungsreglerstellgröße u_{a,1} bzw. u_{a,2} (hier nicht gezeigt) wird zum einen dem Verzögerungsregler 20 der ersten Schienenfahrzeugeinheit 1 die durch die Schienenfahrzeugeinheit 1 ermittelte Ist-Verzögerung a_{ist,1} der ersten Schienenfahrzeugeinheit 1 zugeführt. Zum anderen wird dem Verzögerungsregler 20 der zweiten Schienenfahrzeugeinheit 2 die durch die Schienenfahrzeugeinheit 2 ermittelte Ist-Verzögerung a_{ist,2} der zweiten Schienenfahrzeugeinheit 2 zugeführt. Für jede der Schienenfahrzeugeinheiten 1, 2 wird dann aus der Summe der jeweiligen Verzögerungsreglerstellgröße u_{a,1} bzw. u_{a,2} und der jeweiligen Stellgrößenreglerstellgröße u_{c,1} bzw. u_{c,2} (hier nicht gezeigt) die jeweilige Gesamtstellgröße u₁ bzw. u₂ (hier nicht gezeigt) gebildet. Wie bereits zur vorstehenden Mehrgrößen-Verzögerungsregelungsvorrichtung 10 beschrieben, wird die jeweilige Gesamtstellgröße u₁ bzw. u₂ über die ihr jeweils zugeordneten Gesamtbremskraftbestimmungseinheiten 21 und Bremskraftverteilungseinheiten 22 den jeweiligen Bremskraftsteuerungseinheiten 23 als Bremskraftverteilung F_{1,1} bis F_{n,1} für die ersten Schienenfahrzeugeinheit 1 bzw. als Bremskraftverteilung F_{1,2} bis F_{n,2} für die zweite Schienenfahrzeugeinheit 2 zugeführt. Die Bremskraftsteuerungseinheiten 23 der ersten und zweiten Schienenfahrzeugeinheit 1, 2 steuern die ihnen jeweils zuordenbare Bremseinrichtung über eine Bremskrafterzeugungseinheit 40 an. Die Bremserzeugungseinheit 40 ist hier als eine über beide Schienenfahrzeugeinheiten 1, 2 ansteuerbare Bremserzeugungseinheit 40 ausgebildet. In alternativen Ausführungsformen können die erste und zweite Schienenfahrzeugeinheit 1, 2 aber auch jeweils eine eigene Bremserzeugungseinheit 40 aufweisen, die über die jeweiligen Bremskraftsteuerungseinheiten 23 ansteuerbar sind.

Die Mehrgrößenverzögerungsregelungsvorrichtung 10 der ersten Schienenfahrzeugeinheit 1 führt die eigene Netto-Stellgröße u_{n,1} der Filtereinheit 32 der ersten Schienenfahrzeugeinheit 1 zu. Zudem wird die Netto-Stellgröße u_{n,1} der ersten Schienenfahrzeugeinheit 1 auch an die Normalstellgrößenbestimmungseinheit 33 der zweiten Schienenfahrzeugeinheit 2 weitergeleitet. Analog hierzu führt die Mehrgrößenverzögerungsregelungsvorrichtung 10 der zweiten Schienenfahrzeugeinheit 2 die eigene Netto-Stellgröße u_{n,2} der Filtereinheit 32 der zweiten Schienenfahrzeugeinheit 2 zu. Ebenso analog wird die Netto-Stellgröße u_{n,2} der zweiten Schienenfahrzeugeinheit 2 auch an die Normalstellgrößenbestimmungseinheit 33 der ersten Schienenfahrzeugeinheit 1 weitergeleitet. Demnach wird die Normalstellgröße u_{z} der jeweils einen Schienenfahrzeugeinheit 1, 2 in der jeweiligen Normalstellgrößenbestimmungseinheit 33 durch die jeweils eigene gefilterte Netto-Stellgröße u_{nf,1}, u_{nf,2} sowie die Netto-Stellgröße u_{n,2}, u_{n,1} der jeweils anderen Schienenfahrzeugeinheit 2, 1 gebildet. Gemäß alternativen Ausführungsformen kann die Normalstellgröße u_{z} der jeweils einen Schienenfahrzeugeinheit 1, 2 in der jeweiligen Normalstellgrößenbestimmungseinheit 33 durch die jeweils eigene gefilterte Netto-Stellgröße u_{nf,1}, u_{nf,2} sowie die gefilterten Netto-Stellgröße u_{nf,2}, u_{nf,1} der jeweils anderen Schienenfahrzeugeinheit 2, 1 gebildet. Die Netto-Stellgrößen u_{n,2}, u_{n,1} der jeweils anderen Schienenfahrzeugeinheit 2, 1 können hierzu über die jeweils eigene Filtereinheit 32 der anderen Schienenfahrzeugeinheit 2, 1 und/oder die Filtereinheit 32 der Schienenfahrzeugeinheit 1, 2, der sie zugeführt werden, gefiltert werden.

Die Normalstellgröße u_{z1} bzw. u_{z2} wird aus dem gewichteten Mittelwert der eigenen gefilterten Netto-Stellgröße u_{nf,1} bzw. u_{nf,2} und der Netto-Stellgröße u_{n,2} bzw. u_{n,1} der jeweils anderen Schienenfahrzeugeinheit 1, 2 gebildet. In der exemplarischen Ausführungsform entspricht die Gewichtung der Anzahl der Drehgestelle der jeweiligen Schienenfahrzeugeinheiten, die hier für beide Schienenfahrzeugeinheiten 1, 2 gleich ist. Somit ergibt sich die Normalstellgröße u_{z1} der ersten Schienenfahrzeugeinheit aus u_{z1} = (u_{nf,1} + u_{f,2})/2 und die Normalstellgröße u_{z2} der zweiten Schienenfahrzeugeinheit aus u_{z2} = (u_{nf,2} + u_{f,1})/2.

Die Normalstellgröße u_{z1} wird dem Stellgrößenregler 20 der ersten Schienenfahrzeugeinheit 1 und die Normalstellgröße u_{z2} dem Stellgrößenregler 20 der zweiten Schienenfahrzeugeinheit 2 jeweils als Sollwert übermittelt. Der Istwert entspricht der jeweils eigenen gefilterten Netto-Stellgröße u_{nf,1} bzw. u_{nf,2}. Damit wird also mindestens die eigene Netto-Stellgröße u_{n,1} bzw. u_{n,2}, hier konkret die eigene gefilterte Netto-Stellgröße u_{nf,1} bzw. u_{nf,2}, auf die Verzögerungsregelung, hier konkret auf den jeweiligen Stellgrößenregler 30, zurückgeführt. Durch das beschriebene Vorgehen wird somit nicht nur die Verzögerung in den einzelnen Schienenfahrzeugeinheiten 1, 2 geregelt, sondern auch die Abweichung der eigenen gefilterten Netto-Stellgröße u_{nf,1} bzw. u_{nf,2} von der Normalstellgröße u_{z1} bzw. u_{z2} ausgeregelt. Auf diese Weise werden die verbleibenden Freiheitsgrade des unterbestimmten Systems gebunden. Das System kann somit zumindest bei quasi-statischen Störungen ein definiertes Verhalten aufweisen.

Im Folgenden wird der Vorteil des vorstehend beschriebenen Mehrgrößen-Verzögerungsregelungssystems 100 für zwei Schienenfahrzeugeinheiten zur Verdeutlichung nochmals im Vergleich zu einem Verzögerungsregelungssystem, bei dem lediglich ein Verzögerungsregler pro Schienenfahrzeugeinheit verwendet wird, also keine jeweilige Rückführung über einen Stellgrößenregler erfolgt, erläutert.

Bei einem statischen Messfehler in Bezug auf die ermittelten Ist-Verzögerungen a_{soll,1} und a_{soll,2} der ersten und zweiten Schienenfahrzeugeinheit 1, 2 ergibt sich bei einem System ohne Rückführung ein Offset. Mit anderen Worten driften die durch den jeweiligen Verzögerungsregler gebildeten Stellgrößen auseinander. Damit weicht die reale Bremskraftverteilung von der gewünschten Bremskraftverteilung ab bzw. die Verzögerungsregelung verfälscht die Bremskraftverteilung. Hierdurch ist eine Verletzung der geforderten Kraftschlussbedingungen möglich. Bei einem dynamischen Messfehler stellt sich bei dem System ohne Rückführung eine permanente Abweichung der Stellgrößen zueinander ein. Damit ist die Bremskraftverteilung nicht kontrollierbar und eine Kraftschlussverletzung kann nicht ausgeschlossen werden.

Bei dem erfindungsgemäßen Mehrgrößen-Verzögerungsregelungssystem ergibt sich unter Idealbedingungen, also beispielsweise ohne Auftreten von Messfehlern, zunächst kein Unterschied zum System ohne Rückführung. Tritt ein statischer Messfehler aus, ergibt sich allerdings im Vergleich nur ein geringer Unterschied der jeweiligen Gesamtstellgrößen u₁ und u₂. Der Unterschied ist dabei direkt abhängig von dem Unterschied der jeweiligen Verzögerungsmessung. Bei einem dynamischen Messfehler kann die Störung vollständig ausgeregelt oder zumindest auf ein tolerierbares Maß reduziert werden. Es kommt zu keiner dauerhaften Abweichung der Gesamtstellgrößen u₁ und u₂.

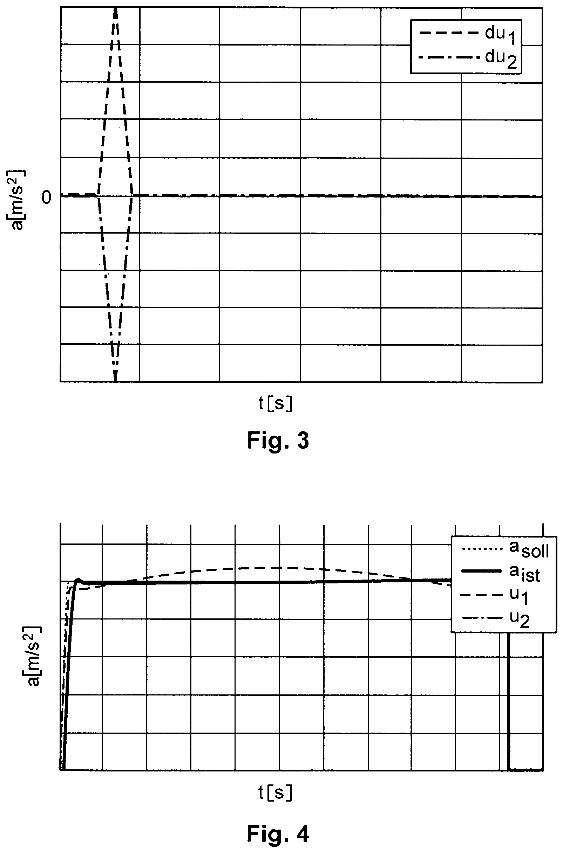

Zu den Vorteilen eines erfindungsgemäßen Mehrgrößen-Verzögerungsregelungssystems, wie dem Mehrgrößen-Verzögerungsregelungssystem 100 gemäß der beschriebenen exemplarischen Ausführungsform, zeigen die **Figuren 3 bis 8** verschiedene Verläufe von Beschleunigungssignalen.

**Figur 3** zeigt hierzu zunächst allgemein eine schematische Darstellung einer dynamischen Störung der Messgrößen. Die Stellgrößen du₁ und du₂ driften dabei auseinander.

**Figur 4** zeigt eine schematische Darstellung der Soll-Beschleunigung aₛₒₗₗ und Ist-Beschleunigung aᵢₛₜ sowie der Stellgrößen u₁ und u₂ für ein ideales System mit unabhängigen Reglern oder einem erfindungsgemäßen Mehrgrößen-Verzögerungsregelungssystem, wie dem Mehrgrößen-Verzögerungsregelungssystem 100. Bei einem idealen System wird angenommen, dass keine Messungenauigkeiten auftreten. Die Stellgrößen u₁ und u₂ verlaufen gleichförmig und regeln die Ist-Beschleunigung aᵢₛₜ auf die Soll-Beschleunigung aₛₒₗₗ. In der Praxis treten aber immer wieder dynamische und statische Messfehler auf, die bei unabhängigen Reglern eine Abweichung der Stellgrößen u₁ und u₂ zueinander bedingen können. Hierdurch ist die Bremskraftverteilung nicht mehr kontrollierbar und kann dazu führen, dass die Einhaltung von Kraftschlussbedingungen nicht mehr gegeben ist.

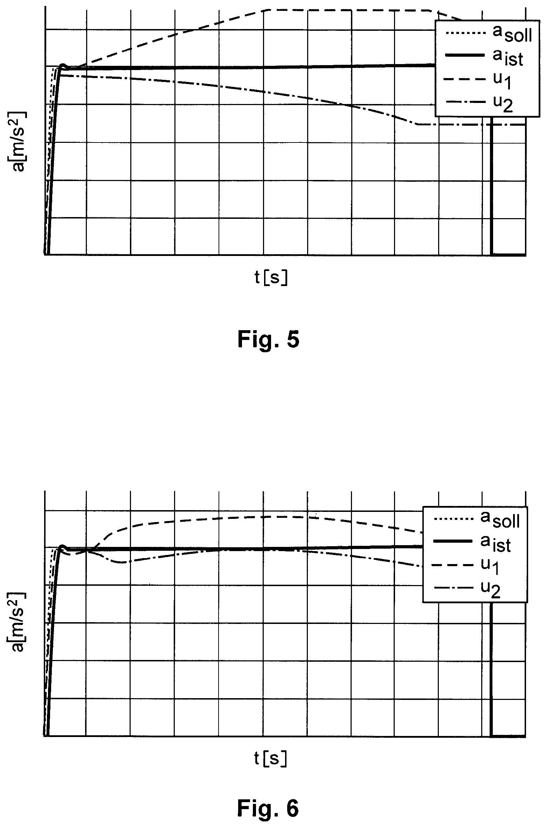

**Figur 5** zeigt hierzu eine schematische Darstellung der Soll-Beschleunigung aₛₒₗₗ und Ist-Beschleunigung aᵢₛₜ sowie der Stellgrößen u₁ und u₂ bei einem statischen Messfehler bei unabhängigen Reglern. Aufgrund der Unterbestimmtheit des Systems bei unabhängigen Reglern driften die Stellgrößen u₁ und u₂ für jeweils zu regelnde Bremskrafterzeugungseinheiten auseinander. Hierdurch driften auch die Kraftschlussverhältnisse auseinander, so dass die Einhaltung vorgegebener Kraftschlussbedingungen nicht mehr gewährleistet werden kann. Darüber hinaus kann hierdurch auch ein übermäßiger Verschleiß an den Bremskrafterzeugungseinheiten auftreten.

Ergänzend zeigt **Figur 6** eine schematische Darstellung der Soll-Beschleunigung aₛₒₗₗ und Ist-Beschleunigung aᵢₛₜ sowie der Stellgrößen u₁ und u₂ bei einem dynamischen Messfehler bei unabhängigen Reglern. Hier führt die Unterbestimmtheit des Systems der unabhängigen Regler zu einer dauerhaften Abweichung der Stellgrößen u₁ und u₂ der jeweils zu regelnden Bremskrafterzeugungseinheiten. Entsprechend ergeben sich auch für die Kraftschlussverhältnisse dauerhafte Abweichungen, die ebenfalls in einer Verletzung der vorgegebenen Kraftschlussbedingungen resultieren können. Auch hier kann sich zudem ein übermäßiger Verschleiß an der jeweiligen stärker belasteten Bremskrafterzeugungseinheit ergeben.

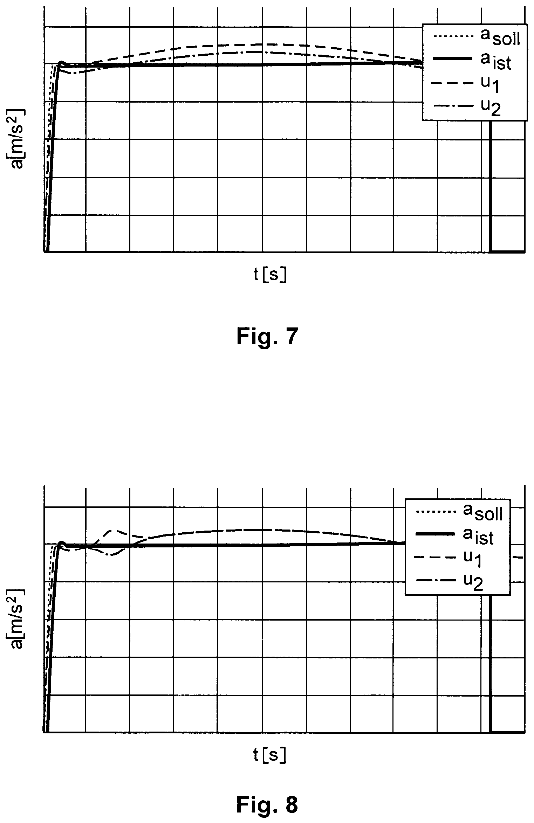

Durch das erfindungsgemäße Mehrgrößen-Verzögerungsregelungssystem, wie beispielsweise das Mehrgrößen-Verzögerungsregelungssystem 100, kann ein Auseinanderdriften der Gesamtstellgrößen u₁ und u₂ für die jeweils zu regelnden Bremskrafterzeugungseinheiten vermindert werden. **Figur 7** zeigt hierzu eine schematische Darstellung der Soll-Beschleunigung aₛₒₗₗ und Ist-Beschleunigung aᵢₛₜ sowie der Gesamtstellgrößen u₁ und u₂ bei einem statischen Messfehler bei einem erfindungsgemäßen Mehrgrößen-Verzögerungsregelungssystem. Im Vergleich zu dem Verlauf der Stellgrößen u₁ und u₂ bei unabhängigen Reglern für die Bremskrafterzeugungseinheiten, wie in **Figur 5** gezeigt, driften die Gesamtstellgrößen u₁ und u₂ bei dem erfindungsgemäßen Mehrgrößen-Verzögerungsregelungssystem bei einem statischen Messfehler nicht mehr auseinander, sondern verlaufen mit vergleichsweise geringem Unterschied im Wesentlichen parallel zueinander. Die Kraftschlussverhältnisse sind demnach ebenfalls im Wesentlichen vergleichbar. Im Ergebnis kann somit die Einhaltung vorgegebener Kraftschlussbedingungen sichergestellt werden. Ebenso reduzieren sich Verschleißspitzen einzelner Bremskrafterzeugungseinheiten und ein Verschleiß an den jeweiligen Bremskrafterzeugungseinheiten bzw. daran angebundener Bremskomponenten kann zumindest annähernd gleich eingestellt werden, sofern eine gesteuerte Bremskraftverteilung dies nicht anders vorbestimmt.

Das erfindungsgemäße Mehrgrößen-Verzögerungsregelungssystem wirkt sich gleichermaßen positiv auf dynamische Messfehler aus. **Figur 8** zeigt hierzu eine schematische Darstellung der Soll-Beschleunigung aₛₒₗₗ und Ist-Beschleunigung aᵢₛₜ sowie der Gesamtstellgrößen u₁ und u₂ bei einem dynamischen Messfehler bei einem erfindungsgemäßen Mehrgrößen-Verzögerungsregelungssystem. Der dynamische Messfehler führt dabei nur zu einem kurzfristigen Auseinanderdriften der Gesamtstellgrößen u₁ und u₂, die aber durch das erfindungsgemäße Mehrgrößen-Verzögerungsregelungssystem wieder zusammengeführt werden. Es verbleibt kein dauerhafter Versatz der Gesamtstellgrößen u₁ und u₂. Entsprechend sind die aus den Stellgrößen u₁ und u₂ resultierenden Kraftschlussverhältnisse nach dem Ausregeln des dynamischen Messfehlers für die jeweiligen Bremserzeugungseinheiten im Wesentlichen gleich. Mit anderen Worten wird die Störung durch einen dynamischen Messfehler vollständig ausgeregelt und es kommt zu keiner dauerhaften Abweichung der Gesamtstellgrößen u₁ und u₂.

Die Erfindung ist nicht auf die beschriebenen Ausführungsformen beschränkt.

Insbesondere sind Merkmale der Mehrgrößen-Verzögerungsregelungsvorrichtung und des Mehrgrößen-Verzögerungsregelungssystems direkt auf entsprechende Verfahrensschritte zur jeweiligen Verzögerungsregelung übertragbar und umgekehrt. Die Mehrgrößen-Verzögerungsregelungsvorrichtung und das Mehrgrößen-Verzögerungsregelungssystem können grundsätzlich in jeder Bremsart, beispielsweise für eine Betriebsbremsung und/oder Notbremsung, und unabhängig der Art der eingesetzten Bremsen, wie elektrodynamischen, elektromechanischen, hydraulischen oder pneumatischen Bremsen Anwendung finden.

### BEZUGSZEICHENLISTE

- 1: erste Schienenfahrzeugeinheit
- 2: zweite Schienenfahrzeugeinheit
- 10: Mehrgrößen-Verzögerungsregelungsvorrichtung
- 20: Verzögerungsregler
- 21: Gesamtbremskraftbestimmungseinheit
- 22: Bremskraftverteilungseinheit
- 23: Bremskraftsteuerungseinheit
- 30: Stellgrößenregler
- 31: Netto-Stellgrößen-Bestimmungseinheit
- 32: Filtereinheit
- 33: Normalstellgrößenbestimmungseinheit
- 40: Bremskrafterzeugungseinheit
- 100: Mehrgrößen-Verzögerungsregelungssystem
- aₛₒₗₗ: Soll-Verzögerung
- a_{ist,1}: Ist-Verzögerung (erste Schienenfahrzeugeinheit)
- a_{ist,2}: Ist-Verzögerung (zweite Schienenfahrzeugeinheit)
- F₁, ..., Fₙ: Bremskraftverteilung (Schienenfahrzeugeinheit)
- F_{1,1}, ..., F_{n,1}: Bremskraftverteilung (erste Schienenfahrzeugeinheit)
- F_{1,2}, ..., F_{n,2}: Bremskraftverteilung (zweite Schienenfahrzeugeinheit)
- F_{ges}: Gesamtbremskraft (Schienenfahrzeugeinheit)
- u₁: Gesamtstellgröße (erste Schienenfahrzeugeinheit)
- u_{a,1}: Verzögerungsreglerstellgröße (erste Schienenfahrzeugeinheit)
- u_{c,1}: Stellgrößenreglerstellgröße (erste Schienenfahrzeugeinheit)
- u_{n,1}: Netto-Stellgröße (erste Schienenfahrzeugeinheit)
- u_{n,2}: Netto-Stellgröße (zweite Schienenfahrzeugeinheit)
- u_{n,n}: Netto-Stellgröße (n-te Schienenfahrzeugeinheit)
- u_{nf,1}: gefilterte Netto-Stellgröße (erste Schienenfahrzeugeinheit)
- u_{nf,2}: gefilterte Netto-Stellgröße (zweite Schienenfahrzeugeinheit)
- u_{ref,1}: Referenzstellgröße (erste Schienenfahrzeugeinheit)
- u_{z}: Normalstellgröße

## Patentansprüche

1. Mehrgrößen-Verzögerungsregelungsvorrichtung (10) für eine Schienenfahrzeugeinheit (1), aufweisend:
einen Verzögerungsregler (20), der dazu konfiguriert ist, eine Verzögerungsreglerstellgröße (u_{a,1}) für die Schienenfahrzeugeinheit (1) zu bestimmen, und
einen Stellgrößenregler (30), der dazu konfiguriert ist, eine Stellgrößenreglerstellgröße (u_{c,1}) für die Schienenfahrzeugeinheit (1) zu bestimmen,
wobei die Mehrgrößen-Verzögerungsregelungsvorrichtung (10) dazu konfiguriert ist, eine Gesamtstellgröße (u₁) für die Schienenfahrzeugeinheit (1) aus der Verzögerungsreglerstellgröße (u_{a,1}) und der Stellgrößenreglerstellgröße (u_{c,1}) zu bilden, und die Gesamtstellgröße (u₁) einer Steuerstrecke (21, 22, 23) für zumindest eine Bremskrafterzeugungseinheit (40) sowie einer Rückführung (31, 32, 33) zum Stellgrößenregler (30) zuzuführen.

2. Mehrgrößen-Verzögerungsregelungsvorrichtung (10) nach Anspruch 1, wobei die Steuerstrecke (21, 22, 23)
eine Gesamtbremskraftbestimmungseinheit (21), die dazu konfiguriert ist, auf Basis der Gesamtstellgröße (u₁) eine Gesamtbremskraft (F_{ges}) der Schienenfahrzeugeinheit (1) zu bestimmen,
eine optionale Bremskraftverteilungseinheit (22), die dazu konfiguriert ist, die Gesamtbremskraft (F_{ges}) in eine Bremskraftverteilung (F₁, ..., Fₙ) zu transferieren, und
eine Bremskraftsteuerungseinheit (23), die dazu konfiguriert ist, die Bremskrafterzeugungseinheit (40) gemäß der Gesamtbremskraft (F_{ges}) oder der Bremskraftverteilung (F₁, ..., Fₙ) anzusteuern,
aufweist.

3. Mehrgrößen-Verzögerungsregelungsvorrichtung (10) nach Anspruch 1 oder 2, wobei die Rückführung (31, 32, 33) eine Netto-Stellgrößen-Bestimmungseinheit (31) aufweist, die dazu konfiguriert ist, auf Basis der Gesamtstellgröße (u₁) oder der Gesamtstellgröße (u₁) unter Berücksichtigung einer Referenzstellgröße (u_{ref,1}) der Schienenfahrzeugeinheit (1) eine Netto-Stellgröße (u_{n,1}) zu bestimmen.

4. Mehrgrößen-Verzögerungsregelungsvorrichtung (10) nach Anspruch 3, wobei die Rückführung (31, 32, 33) eine Filtereinheit (32) aufweist, die dazu konfiguriert ist, die Netto-Stellgröße (u_{n,1}) in eine gefilterte Netto-Stellgröße (u_{nf,1}) zu transferieren, und wobei insbesondere Filterparameter der Filtereinheit (32), bevorzugt zumindest eine zeitliche Verschiebung, anpassbar sind.

5. Mehrgrößen-Verzögerungsregelungsvorrichtung (10) nach Anspruch 3 oder 4, wobei die Rückführung (31, 32, 33) dazu konfiguriert ist, dem Stellgrößenregler (30) die Netto-Stellgröße (u_{n,1}) oder die gefilterte Netto-Stellgröße (u_{nf,1}) als Istwert zuzuführen.

6. Mehrgrößen-Verzögerungsregelungsvorrichtung (10) nach einem der vorherigen Ansprüche, wobei die Rückführung (31, 32, 33) eine Normalstellgrößenbestimmungseinheit (33) aufweist, die dazu konfiguriert ist, die Gesamtstellgröße (u₁), die Netto-Stellgröße (u_{n,1}) oder die gefilterte Netto-Stellgröße (u_{nf,1}), insbesondere unter Berücksichtigbarkeit zumindest einer weiteren Einflussgröße (u_{n,2}, ..., u_{n,n}), in eine Normalstellgröße (u_{z}) zu transferieren, und die Rückführung (31, 32, 33) dazu konfiguriert ist, dem Stellgrößenregler (30) die Normalstellgröße (u_{z}) als Sollwert zuzuführen.

7. Mehrgrößen-Verzögerungsregelungsvorrichtung (10) nach Anspruch 6, wobei die Rückführung (31, 32, 33) dazu konfiguriert ist, die Normalstellgröße (u_{z}) von der Normalstellgrößenbestimmungseinheit (33) wieder der Filtereinheit (32) nach Anspruch 4 zuzuführen.

8. Mehrgrößen-Verzögerungsregelungsvorrichtung (10) nach einem der vorhergehenden Ansprüche, wobei der Verzögerungsregler (20) und der Stellgrößenregler (30) durch einen einzigen Regler, insbesondere einen PI-Regler, ausgebildet werden, welcher sowohl die Abweichung der Verzögerung von der Sollverzögerung als auch die Abweichung der Stellgröße von der Normalstellgröße berücksichtigt.

9. Mehrgrößen-Verzögerungsregelungsvorrichtung (10) nach einem der vorhergehenden Ansprüche, wobei der Stellgrößenregler (30) eine statische und/oder dynamische Totzone aufweist.

10. Mehrgrößen-Verzögerungsregelungssystem (100) für ein Schienenfahrzeug oder einen Zugverband mit zumindest einer ersten Schienenfahrzeugeinheit (1) und einer zweiten Schienenfahrzeugeinheit (2), die jeweils eine Mehrgrößen-Verzögerungsregelungsvorrichtung (10) nach einem der Ansprüche 6 bis 9 aufweisen, wobei das Mehrgrößen-Verzögerungsregelungssystem (100) dazu konfiguriert ist,
der jeweiligen Normalstellgrößenbestimmungseinheit (33) der Mehrgrößen-Verzögerungsregelungsvorrichtung (10) der ersten Schienenfahrzeugeinheit (1) und/oder der zweiten Schienenfahrzeugeinheit (2) zumindest die Netto-Stellgröße (u_{n,1}, u_{n,2}) oder gefilterte Netto-Stellgröße (u_{nf,1}, u_{nf,2}) der jeweils anderen Schienenfahrzeugeinheit (1, 2) als zumindest eine Einflussgröße und/oder
der jeweiligen Filtereinheit (32) der Mehrgrößen-Verzögerungsregelungsvorrichtung (10) der ersten Schienenfahrzeugeinheit (1) und/oder der zweiten Schienenfahrzeugeinheit (2) zumindest die Netto-Stellgröße (u_{n,1}, u_{n,2}) oder gefilterte Netto-Stellgröße (u_{nf,1}, u_{nf,2}) der jeweils anderen Schienenfahrzeugeinheit (1, 2) zur Anpassung der Filterparameter
zuzuführen.

11. Mehrgrößen-Verzögerungsregelungssystem (100) nach Anspruch 10, wobei die Normalstellgrößenbestimmungseinheit (33) der Mehrgrößen-Verzögerungsregelungsvorrichtung (10) der ersten Schienenfahrzeugeinheit (1) und/oder der zweiten Schienenfahrzeugeinheit (2) dazu konfiguriert ist, die Normalstellgröße (u_{z}) als gewichteten Mittelwert der eigenen Netto-Stellgröße (u_{n,1}, u_{n,2}) oder der eigenen gefilterten Netto-Stellgröße (u_{nf,1}, u_{nf,2}) und der zumindest einen Netto-Stellgröße (u_{n,2}, u_{n,1}) der jeweils anderen Schienenfahrzeugeinheit (1, 2) zu bestimmen, und wobei die jeweiligen Gewichtungsanteile insbesondere
zu einer Anzahl an Drehgestellen oder Wagen der entsprechenden Schienenfahrzeugeinheit (1, 2),
zu einem Beitrag der entsprechenden Schienenfahrzeugeinheit (1, 2) an der Gesamtbremskraft des Schienenfahrzeugs,
zu den aktuellen oder nominellen Massen der entsprechenden Schienenfahrzeugeinheiten (1, 2) und/oder
zu den Massen der entsprechenden Schienenfahrzeugeinheiten (1, 2) und einer vorbestimmten Verteilung der Massen
korrespondieren.

12. Mehrgrößen-Verzögerungsregelungssystem (100) nach Anspruch 11, wobei die Normalstellgrößenbestimmungseinheit (33) dazu konfiguriert ist, die jeweiligen Gewichtungsanteile anzupassen, insbesondere vorbestimmte Gewichtungsanteile auf null zu setzen.

13. Mehrgrößen-Verzögerungsregelungssystem (100) nach einem der Ansprüche 10 bis 12, wobei das Mehrgrößen-Verzögerungsregelungssystem (100) dazu konfiguriert ist, die zumindest eine Einflussgröße zur Zuführung zur Normalstellgrößenbestimmungseinheit (33) über die Filtereinheit (32) oder eine weitere Filtereinheit zu führen.

14. Verfahren zur Verzögerungsregelung einer Schienenfahrzeugeinheit (1) eines Schienenfahrzeugs, umfassend die Schritte:
- Bestimmen einer Verzögerungsreglerstellgröße (u_{a,1}) über einen Verzögerungsregler (20),
- Bestimmen einer Stellgrößenreglerstellgröße (u_{c,1}) über einen Stellgrößenregler (30) und
- Bilden einer Gesamtstellgröße (u₁) aus der Verzögerungsreglerstellgröße (u_{a,1}) und der Stellgrößenreglerstellgröße (u_{c,1}),
wobei die Gesamtstellgröße (u₁) einer Steuerstrecke (21, 22, 23) für eine Bremskrafterzeugungseinheit (40) zugeführt sowie über eine Rückführung (31, 32, 33) zum Stellgrößenregler (30) rückgeführt wird.

15. Verfahren nach Anspruch 14, wobei die Gesamtstellgröße (u₁) über die Rückführung (31, 32, 33) in eine zu einer Referenzstellgröße (u_{ref,1}) setzbaren Netto-Stellgröße (u_{n,1}), insbesondere in eine gefilterte Netto-Stellgröße (u_{nf,1}), transferiert wird, die dem Stellgrößenregler (30) als Istgröße zugeführt wird und parallel über eine Normalstellgrößenbestimmungseinheit (33), insbesondere zur Berücksichtigung von zumindest einer Stellgröße einer weiteren Schienenfahrzeugeinheit (2) als Einflussgröße, weiter in eine Normalstellgröße (u_{z}) transferiert wird, die dem Stellgrößenregler (30) als Sollgröße zugeführt wird.

## Claims

1. A multivariable deceleration control device (10) for a rail vehicle unit (1), having:
a deceleration controller (20) configured to determine a deceleration controller manipulated variable (u_{a,1}) for the rail vehicle unit (1), and
a manipulated variable controller (30) configured to determine a manipulated variable controller manipulated variable (u_{c,1}) for the rail vehicle unit (1),
wherein the multi-variable deceleration control device (10) is configured to form a overall manipulated variable (u₁) for the rail vehicle unit (1) from the deceleration controller manipulated variable (u_{a,1}) and the manipulated variable controller manipulated variable (u_{c,1}), and supply the overall manipulated variable (u₁) to a controlled system (21,22, 23) for at least one brake force generating unit (40) and a return line (31, 32, 33) to the manipulated variable controller (30).

2. The multivariable deceleration control device (10) according to claim 1, wherein the controlled system (21, 22, 23) has
a overall braking force determination unit (21) configured to determine a overall braking force (F_{ges}) of the rail vehicle unit (1) based on the overall manipulated variable (u₁),
an optional brake force distribution unit (22) configured to transfer the overall braking force (F_{ges}) to a braking force distribution (F₁, ..., Fₙ), and
a brake force control unit (23) configured to control the brake force generating unit (40) according to the overall braking force (F_{ges}) or the brake force distribution (F₁, ..., Fₙ)

3. The multivariable deceleration control device (10) according to claim 1 or 2, wherein the return line (31, 32, 33) has a net manipulated variable determination unit (31), which is configured to determine a net manipulated variable (u_{n,1}) based on the overall manipulated variable (u₁) or the overall manipulated variable (u₁), taking into account a reference manipulated variable (u_{ref,1}) of the rail vehicle unit (1).

4. The multivariable deceleration control device (10) according to claim 3, wherein the return line (31, 32, 33) has a filter unit (32), which is configured to transfer the net manipulated variable (u _{n,1}) into a filtered net manipulated variable (u_{nf,1}), and wherein in particular filter parameters of the filter unit (32), preferably at least onw time shift, are adaptable.

5. The multivariable deceleration control device (10) according to claim 3 or 4, wherein the return line (31, 32, 33) is configured to supply to the manipulated variable controller (30) the net manipulated variable (u_{n,1}) or the filtered net manipulated variable (u_{nf,1}) as the actual value.

6. The multivariable deceleration control device (10) according to any one of the preceding claims, wherein the return line (33, 32, 33) has a normal manipulated variable determination unit (33), which is configured to transfer the overall manipulated variable (u₁), the net manipulated variable (u_{n,1}) or the filtered net manipulated variable (u_{nf,1}), in particular under consideration of at least one further influencing variable (u_{n,2}, ... u_{n,n}), to a normal manipulated variable (u_{z}), and the return line (31, 32, 33) is configured to supply the normal manipulated variable (u_{z}) as the setpoint to the manipulated variable controller (30).

7. The multivariable deceleration control device (10) according to claim 6, wherein the return line (31, 32, 33) is configured to supply the normal manipulated variable (u_{z}) from the normal manipulated variable determination unit (33) again to the filter unit (32) according to claim 4.

8. The multivariable deceleration control device (10) according to any one of the preceding claims, wherein the deceleration controller (20) and the manipulated variable controller (30) are formed by a single controller, in particular a PI controller, which takes into consideration both the deviation of the deceleration from the target deceleration and also the deviation of the manipulated variable from the normal manipulated variable.

9. The multivariable deceleration control device (10) according to any one of the preceding claims, wherein the manipulated variable controller (30) has a static and/or dynamic dead zone.

10. A multivariable deceleration control system (100) for a rail vehicle or a train set having at least one first rail vehicle unit (1) and a second rail vehicle unit (2), each having a multivariable deceleration control device (10) according to any one of claims 6 to 9, wherein the multivariable deceleration control system (100) is configured to: supply to the respective normal manipulated variable determination unit (33) of the multivariable deceleration control device (10) of the first rail vehicle unit (1) and/or of the second rail vehicle unit (2) at least the net control variable (u _{n,1}, u_{n,2}) or the filtered net control variable (u_{nf,1}, un_{f,2}) of the respective other rail vehicle unit (1.2) as at least one influencing variable and/or
to the respective filter unit (32) of the multivariable deceleration control device (10) of the first rail vehicle unit (1) and/or of the second rail vehicle unit (2) at least the net manipulated variable (u_{n,1}, u_{n,2}) or the filtered net manipulated variable (u_{nf,1}, u_{nf,2}) of the respective other rail vehicle unit (1, 2) for adapting the filter parameters

11. The multivariable deceleration control system (100) according to claim 10, wherein the normal manipulated variable determination unit (33) of the multivariable deceleration control device (10) of the first rail vehicle unit (1) and/or of the second rail vehicle unit (2) is configured to determine the normal manipulated variable (u _{z}) as the weighted average of the ego net manipulated variable (u_{n,1}, u_{n,2}) or the ego filtered net manipulated variable (u_{nf,1}, u_{nf,2}) and the at least one net manipulated variable (u_{n,2}, u_{n,1}) of the respective other rail vehicle unit (1, 2), and wherein the respective weighting components in particular correspond
to a number of trucks or carriages of the corresponding rail vehicle unit (1, 2),
to a contribution of the corresponding rail vehicle unit (1, 2) to the overall brake force of the rail vehicle,
to the current or nominal masses of the corresponding rail vehicle units (1, 2), and/or
to the masses of the corresponding rail vehicle units (1, 2) and a predetermined distribution of the masses.

12. The multivariable deceleration control system (100) according to claim 11, wherein the normal manipulated variable determination unit (33) is configured to adapt the respective weighting components, in particular to set predetermined weighting components to zero.

13. The multivariable deceleration control system (100) according to any one of claims 10 to 12, wherein the multivariable deceleration control system (100) is configured to guide the at least one influencing variable for supplying to the normal manipulated variable determination unit (33) via the filter unit (32) or a further filter unit.

14. A method for deceleration control of a rail vehicle unit (1) of a rail vehicle, comprising the steps:
- determining a deceleration controller manipulated variable (u_{a,1}) via a deceleration controller (20),
- determining a manipulated variable controller manipulated variable (u_{c,1}) via a manipulated variable controller (30) and
- forming a overall manipulated variable (u₁) from the deceleration controller manipulated variable (u_{a,1}) and the manipulated variable controller manipulated variable (u_{c,1}),
wherein the overall manipulated variable (u₁) is supplied to a controlled system (21,22, 23) for a brake force generating unit (40) and supplied back to the manipulated variable controller (30) via a return line (31, 32, 33).

15. The method according to claim 14, wherein the overall manipulated variable (u₁) is transferred via the return line (31, 32, 33) into a net manipulated variable (u_{n, 1}) that can be set to a reference manipulated variable (u_{ref,1}), in particular into a filtered net manipulated variable (u_{nf,1}), which is supplied to the manipulated variable controller (30) as an actual variable and is transferred in parallel via a normal manipulated variable determination unit (33), in particular to take into account at least one manipulated variable of another rail vehicle unit (2) as an influencing variable, further transferred into a normal manipulated variable (u_{z}), which is supplied to the manipulated variable controller (30) as a setpoint variable.

## Revendications

1. Dispositif de régulation de retard multivariable (10) pour une unité de véhicule ferroviaire (1) présentant :
un régulateur de retard (20) qui est configuré afin de déterminer une variable de réglage de régulateur de retard (u_{a,1}) pour l'unité de véhicule ferroviaire (1) et
un régulateur de variable de réglage (30) qui est configuré afin de déterminer une variable de réglage de régulateur de variable de réglage (u_{c,1}) pour l'unité de véhicule ferroviaire (1),
dans lequel le dispositif de régulation de retard multivariable (10) est configuré afin de former une variable de réglage totale (u₁) pour l'unité de véhicule ferroviaire (1) à partir de la variable de réglage de régulateur de retard (u_{a,1}) et de la variable de réglage de régulateur de variable de réglage (u_{c,1}), et de transmettre la variable de réglage totale (u₁) à un système commandé (21, 22, 23) pour au moins une unité de génération de force de freinage (40) ainsi qu'une ligne de retour (31, 32, 33) au régulateur de variable de réglage (30).

2. Dispositif de régulation de retard multivariable (10) selon la revendication 1, dans lequel le système commandé (21, 22, 23) présente
une unité de détermination de force de freinage totale (21) qui est configurée afin de déterminer, sur la base de la variable de réglage totale (u₁), une force de freinage totale (Fₜₒₜ) de l'unité de véhicule ferroviaire (1),
une unité de répartition de force de freinage (22) optionnelle qui est configurée afin de transférer la force de freinage totale (Fₜₒₜ) dans une répartition de force de freinage (F₁, ..., Fₙ), et
une unité de commande de force de freinage (23) qui est configurée afin de commander l'unité de génération de force de freinage (40) selon la force de freinage totale (Fₜₒₜ) ou la répartition de force de freinage (F₁, ..., Fₙ).

3. Dispositif de régulation de retard multivariable (10) selon la revendication 1 ou 2, dans lequel la ligne de retour (31, 32, 33) présente une unité de détermination de variable de réglage nette (31) qui est configurée afin de déterminer, sur la base de la variable de réglage totale (u₁) ou de la variable de réglage totale (u₁), une variable de réglage nette (u_{n,1}) en tenant compte d'une variable de réglage de référence (u_{réf,1}) de l'unité de véhicule ferroviaire (1).

4. Dispositif de régulation de retard multivariable (10) selon la revendication 3, dans lequel la ligne de retour (31, 32, 33) présente une unité de filtrage (32) qui est configurée afin de transférer la variable de réglage nette (u_{n,1}) dans une variable de réglage nette filtrée (u_{nf,1}) et dans lequel en particulier des paramètres de filtrage de l'unité de filtrage (32), de préférence au moins un décalage temporel, peuvent être adaptés.

5. Dispositif de régulation de retard multivariable (10) selon la revendication 3 ou 4, dans lequel la ligne de retour (31, 32, 33) est configurée afin de transmettre au régulateur de variable de réglage (30) la variable de réglage nette (u_{n,1}) ou la variable de réglage nette filtrée (u_{nf,1}) comme valeur réelle.

6. Dispositif de régulation de retard multivariable (10) selon l'une quelconque des revendications précédentes, dans lequel la ligne de retour (31, 32, 33) présente une unité de détermination de variable de réglage normale (33) qui est configurée afin de transférer la variable de réglage totale (u₁), la variable de réglage nette (u_{n,1}) ou la variable de réglage nette filtrée (u_{nf,1}), en particulier en pouvant tenir compte d'au moins une autre variable d'influence (u_{n,2}, ..., u_{n,n}), dans une variable de réglage normale (u_{z}), et la ligne de retour (31, 32, 33) est configurée afin de transmettre au régulateur de variable de réglage (30) la variable de réglage normale (u_{z}) comme valeur de consigne.

7. Dispositif de régulation de retard multivariable (10) selon la revendication 6, dans lequel la ligne de retour (31, 32, 33) est configurée afin de transmettre de nouveau la variable de réglage normale (u_{z}) de l'unité de détermination de variable de réglage normale (33) à l'unité de filtrage (32) selon la revendication 4.

8. Dispositif de régulation de retard multivariable (10) selon l'une quelconque des revendications précédentes, dans lequel le régulateur de retard (20) et le régulateur de variable de réglage (30) sont formés par un régulateur unique, en particulier un régulateur PI, qui tient compte aussi bien de l'écart du retard par rapport au retard de consigne que de l'écart de la variable de réglage par rapport à la variable de réglage normale.

9. Dispositif de régulation de retard multivariable (10) selon l'une quelconque des revendications précédentes, dans lequel le régulateur de variable de réglage (30) présente une zone morte statique et/ou dynamique.

10. Système de régulation de retard multivariable (100) pour un véhicule ferroviaire ou une unité de train avec au moins une première unité de véhicule ferroviaire (1) et une seconde unité de véhicule ferroviaire (2) qui présentent respectivement un dispositif de régulation de retard multivariable (10) selon l'une quelconque des revendications 6 à 9, dans lequel le système de régulation de retard multivariable (100) est configuré afin de transmettre
à l'unité de détermination de variable de réglage normale (33) du dispositif de régulation de retard (10) de la première unité de véhicule ferroviaire (1) et/ou de la seconde unité de véhicule ferroviaire (2) au moins la variable de réglage nette (u_{n,1}, u_{n,2}) ou variable de réglage nette filtrée (u_{nf,1}, un_{f,2}) de l'autre unité de véhicule ferroviaire respective (1,2) comme au moins une variable d'influence et/ou
à l'unité de filtrage (32) respective du dispositif de régulation de retard multivariable (10) de la première unité de véhicule ferroviaire (1) et/ou de la seconde unité de véhicule ferroviaire (2) au moins la variable de réglage nette (u_{n,1}, u_{n,2}) ou variable de réglage nette filtrée (u_{nf,1}, u_{nf,2}) de l'autre unité de véhicule ferroviaire (1, 2) respective pour adapter les paramètres de filtrage.

11. Système de régulation de retard multivariable (100) selon la revendication 10, dans lequel l'unité de détermination de variable de réglage normale (33) du dispositif de régulation de retard multivariable (10) de la première unité de véhicule ferroviaire (1) et/ou de la seconde unité de véhicule ferroviaire (2) est configurée afin de déterminer la variable de réglage normale (u_{z}) comme valeur moyenne pondérée de la variable de réglage nette propre (u_{n,1}, u_{n,2}) ou de la variable de réglage nette filtrée propre (u_{nf,1}, u_{nf,2}) et la au moins une variable de réglage nette (u_{n,2}, u_{n,1}) de l'autre unité de véhicule ferroviaire (1, 2) respective et dans lequel les parts de pondération respectives en particulier correspondent en particulier
à un nombre de bogies ou wagons de l'unité de véhicule ferroviaire correspondante (1, 2),
à une contribution de l'unité de véhicule ferroviaire (1, 2) correspondante à la force de freinage totale du véhicule ferroviaire,
aux masses actuelles ou nominales des unités de véhicule ferroviaire (1, 2) correspondantes et/ou
aux masses des unités de véhicule ferroviaire (1, 2) correspondantes et une répartition prédéterminée des masses.

12. Système de régulation de retard multivariable (100) selon la revendication 11, dans lequel l'unité de détermination de variable de réglage normale (33) est configurée afin d'adapter les parts de pondération respectives, en particulier de mettre à zéro des parts de pondération prédéterminées.

13. Système de régulation de retard multivariable (100) selon l'une quelconque des revendications 10 à 12, dans lequel le système de régulation de retard multivariable (100) est configuré afin de guider la au moins une variable d'influence pour la transmission à l'unité de détermination de variable de réglage normale (33) par l'intermédiaire de l'unité de filtrage (32) ou d'une autre unité de filtrage.

14. Procédé de régulation de retard d'une unité de véhicule ferroviaire (1) d'un véhicule ferroviaire, comprenant les étapes suivantes :
- la détermination d'une variable de réglage de régulateur de retard (u_{a,1}) par l'intermédiaire d'un régulateur de retard (20),
- la détermination d'une variable de réglage de régulateur de variable de réglage (u_{c,1}) par l'intermédiaire d'un régulateur de variable de réglage (30) et
- la formation d'une variable de réglage totale (u₁) à partir de la variable de réglage de régulateur de retard (u_{a,1}) et de la variable de réglage de régulateur de variable de réglage (u_{c,1}),
dans lequel la variable de réglage totale (u₁) est transmise à un système commandé (21, 22, 23) pour une unité de génération de force de freinage (40) ainsi que ramenée au régulateur de variable de réglage (30) par l'intermédiaire d'une ligne de retour (31, 32, 33).

15. Procédé selon la revendication 14, dans lequel la variable de réglage totale (u₁) est transférée par l'intermédiaire de la ligne de retour (31, 32, 33) dans une variable de réglage nette (u_{n,1}) pouvant être réglée à une variable de réglage de référence (u_{réf,1}), en particulier dans une variable de réglage nette filtrée (u_{nf,1}), qui est transmise au régulateur de variable de réglage (30) comme variable réelle et est transférée parallèlement par l'intermédiaire d'une unité de détermination de variable de réglage normale (33), en particulier en tenant compte d'au moins une variable de réglage d'une autre unité de véhicule ferroviaire (2) comme variable d'influence, de nouveau dans une variable de réglage normale (u_{z}) qui est transmise au régulateur de variable de réglage (30) comme variable de consigne.
